# FASCICULE DE BREVET EUROPEEN

(11) **EP 4 373 778 B1**
(45) Date de publication et mention de la délivrance du brevet: **29.01.2025**
(21) Numéro de dépôt: 22740928.1
(22) Date de dépôt: 11.07.2022
(51) Int. Cl.: B60K 1/00, B60K 17/22, B60K 17/344, B60K 17/356, H01M 10/0525, H01M 50/244, B66F 9/075, B66F 9/065, B60K 1/04, H01M 50/249

(54) **ENGIN DE TRAVAIL COMPRENANT DES ÉLÉMENTS DE BATTERIE**
ARBEITSMASCHINE MIT BATTERIEELEMENTE
WORKING MACHINE INCLUDING BATTERY ELEMENTS

(30) Priorité: 20.07.2021 FR 2107830; 20.07.2021 FR 2107831
(43) Date de publication de la demande: 29.05.2024
(73) Titulaire: MANITOU BF, 44150 Ancenis (FR)
(72) Inventeur: BESSEAU, Maurice, 44150 ANCENIS (FR); BROCHARD, François, 44150 ANCENIS (FR); POUSSET, Alexis, 44150 ANCENIS (FR)
(74) Mandataire: Loyer & Abello
(86) Numéro de dépôt international: PCT/EP2022/069356
(87) Numéro de publication internationale: WO 2023/001621

(56) Documents cités:
- EP-A1- 3 546 418
- EP-A1- 3 787 066
- US-A1- 2015 122 762
- US-A1- 2020 156 459

## Description

### Domaine technique

L'invention se rapporte à un engin de travail comprenant un bras de levage et des éléments de batterie pour fournir de la puissance électrique à l'engin de travail.

### Technique antérieure

On connaît par le document JP 2005-262978 A un engin de travail comprenant un châssis mobile déplaçable sur la surface du sol, le châssis comportant deux longerons parallèles entre eux et s'étendant parallèlement à un axe avant-arrière de l'engin, et un bras de levage, le bras de levage étant monté entre les deux longerons de façon à être mobile à pivotement par rapport aux deux longerons.

Dans le document JP 2005-262978 A, la puissance nécessaire au fonctionnement de l'engin de travail est fournie par un moteur à combustion interne. Or, il existe une demande de plus en plus forte pour des engins de travail à motorisation électrique.

De plus, le document EP3546418A1 divulgue un engin de travail selon le préambule de la revendication 1.

Toutefois, pour des engins de travail destinés au levage, la puissance nécessaire pour la propulsion du châssis et pour l'actionnement du bras de levage est importante.

### Résumé de l'invention

Certains aspects de l'invention partent du constat que pour que l'autonomie de l'engin de travail à motorisation électrique ne soit pas trop faible, celui-ci doit emporter un volume conséquent d'éléments de batterie ; et qu'il est donc nécessaire de trouver une solution pour positionner les éléments de batterie dans l'engin de travail. L'équilibre général de la machine dépend de la répartition des principales masses, dont les éléments de batterie. D'autre part, les éléments de batterie doivent être protégés contre les chocs, en particulier dus à la chute d'objets en hauteur. En effet, en cas de choc, les éléments de batterie sont susceptibles d'être endommagés, ce qui peut les rendre non-fonctionnels voire même conduire à un risque d'incendie ou d'explosion lorsque les éléments de batterie sont des éléments de batterie lithium-ion.

Une idée à la base de l'invention consiste à pouvoir positionner les éléments de batterie entre les deux longerons du châssis.

Selon un premier objet, l'invention propose ainsi un engin de travail comprenant :
- un châssis mobile déplaçable sur la surface du sol, le châssis comportant deux longerons parallèles entre eux et s'étendant parallèlement à une direction longitudinale de l'engin ; et
- un bras de levage s'étendant parallèlement à la direction longitudinale de l'engin, le bras de levage étant articulé aux deux longerons entre les deux longerons de façon à être mobile à pivotement par rapport aux deux longerons autour d'un axe de pivotement s'étendant perpendiculairement à la direction longitudinale de l'engin,
où l'engin de travail comprend :
- des éléments de batterie ; et
- au moins un moteur électrique pour la propulsion du châssis et pour l'actionnement du bras de levage, les éléments de batterie étant connectés électriquement audit au moins un moteur électrique pour fournir de la puissance audit au moins un moteur électrique ;
et où les éléments de batterie sont disposés entre les deux longerons.

On obtient ainsi un engin de travail dont la motorisation peut être partiellement voire même entièrement électrique. Grâce au fait que les éléments de batterie sont disposés entre les deux longerons entre lesquels est articulé le bras de levage, les éléments de batterie contribuent à l'équilibrage latéral de l'engin de travail, ou du moins ne contribuent pas significativement à un déséquilibrage latéral de l'engin de travail, puisque le centre de masse de tous les éléments de batterie pris ensemble est situé relativement près, voire même exactement sur un axe longitudinal médian de l'engin de travail. En outre, les éléments de batterie sont situés sous le bras de levage et bien protégés contre les chocs, et notamment davantage protégés contre les chocs que s'ils étaient disposés sur un côté de l'engin de travail.

Sauf mention explicite contraire, l'expression « connecté électriquement » inclut aussi bien une connexion électrique directe (sans élément électrique interposé) qu'une connexion électrique indirecte (avec un voire plusieurs éléments électriques interposés).

Selon des modes de réalisation, un tel engin de travail peut présenter une ou plusieurs des caractéristiques suivantes.

Selon un mode de réalisation, les éléments de batterie sont disposés de part et d'autre d'un axe longitudinal médian de l'engin de travail et/ou à cheval sur l'axe longitudinal médian de l'engin de travail, de préférence avec une distribution de masse sensiblement équilibrée par rapport à l'axe longitudinal médian.

Grâce à une telle distribution, les éléments de batterie ont un effet relativement neutre, voire un effet favorable sur l'équilibrage latéral de l'engin. Par ailleurs, un équilibrage latéral globalement acceptable de l'engin de travail peut être obtenu par un agencement équilibré des autres composants de l'engin de travail. Cet agencement équilibré peut en outre être réalisé de différentes manières.

Selon un mode de réalisation, l'engin de travail comprend en outre un essieu avant monté à une portion d'extrémité avant du châssis et un essieu arrière monté à une portion d'extrémité arrière du châssis, et au moins une transmission accouplant ledit au moins un moteur électrique à au moins l'un de l'essieu avant et l'essieu arrière. La portion d'extrémité désigne ici non seulement une extrémité du châssis mais également une zone à proximité de l'extrémité. Ainsi, le châssis peut comporter une portion de porte-à-faux à l'avant de l'essieu avant et/ou à l'arrière de l'essieu arrière.

Selon un mode de réalisation, les éléments de batterie sont disposés entre l'essieu avant et l'essieu arrière le long de la direction longitudinale.

Aussi bien la propulsion de l'engin de travail que l'actionnement du bras de levage peuvent être partiellement voire même entièrement électriques.

Pour sa propulsion, l'engin peut comporter un essieu moteur ou deux essieux moteurs. L'essieu moteur peut être un essieu avant ou un essieu arrière.

Pour l'entraînement d'un essieu, l'engin peut employer un ou plusieurs moteurs électriques couplés par une chaîne de transmission mécanique à l'essieu, autrement dit un entraînement électromécanique. La chaîne de transmission mécanique peut comporter un ou plusieurs éléments choisis dans le groupe consistant en : un train d'engrenage réducteur, un arbre de transmission et un joint de cardan. Le moteur électrique peut être un moteur dédié à la propulsion.

Alternativement, pour l'entraînement d'un essieu, l'engin peut employer un ou plusieurs moteurs électriques couplés par une chaîne de transmission hydraulique à l'essieu, autrement dit un entraînement électrohydraulique. La chaîne de transmission hydraulique peut comporter une pompe hydraulique entraînée par le moteur électrique et au moins un moteur hydraulique entraîné par un flux hydraulique généré par la pompe hydraulique. La chaîne de transmission hydraulique peut être une chaîne de transmission hydrostatique, à savoir en circuit fermé. La pompe hydraulique et le moteur électrique peuvent être dédiés à la propulsion. Alternativement, la pompe hydraulique et le moteur électrique peuvent être communs avec d'autres fonctions hydrauliques de l'engin, comme une fonction d'actionnement hydraulique du bras de levage ou autre.

Le cas échéant, pour l'entraînement de deux essieux, l'engin peut employer deux entraînements indépendants ou un entraînement commun. Les deux entraînements indépendants peuvent de natures différentes, par exemple un entraînement électromécanique et un entraînement électrohydraulique, ou de natures identiques, par exemple deux entraînements électromécaniques. L'entraînement commun peut comporter deux arbres moteurs reliant les deux essieux à un moteur commun, qui peut être un moteur électrique ou un moteur hydraulique. Le moteur commun peut être un moteur dédié à la propulsion.

Selon un mode de réalisation, ledit au moins un moteur électrique comporte : un moteur électrique de propulsion pour la propulsion du châssis, les éléments de batterie étant connectés électriquement au moteur électrique de propulsion via un premier variateur électrique de vitesse, ladite transmission comportant une chaîne de transmission mécanique ou hydraulique couplant ledit moteur électrique de propulsion à au moins l'un de l'essieu avant et l'essieu arrière.

Selon un mode de réalisation, ledit au moins un moteur électrique comporte un premier moteur électrique de propulsion couplé à l'essieu avant par une première chaîne de transmission mécanique et un deuxième moteur électrique de propulsion couplé à l'essieu arrière par une deuxième chaîne de transmission mécanique.

Selon un mode de réalisation, ladite transmission comporte une chaîne de transmission hydraulique couplant ledit au moins un moteur électrique à au moins l'un de l'essieu avant et l'essieu arrière, la chaîne de transmission hydraulique comprenant au moins une pompe hydraulique entraînée par ledit au moins un moteur électrique et au moins un moteur hydraulique entraîné par un flux hydraulique généré par ladite pompe hydraulique, ledit au moins un moteur hydraulique étant couplé à au moins l'un de l'essieu avant et l'essieu arrière.

Pour l'actionnement du bras de levage, l'engin peut comporter un ou plusieurs actionneurs électriques, à savoir un actionnement électrique par exemple par un vérin électrique, et/ou un ou plusieurs actionneurs hydrauliques alimentés par une ou plusieurs pompes entraînées par un ou plusieurs moteurs électriques, à savoir un actionnement électrohydraulique, par exemple par un vérin hydraulique. Plusieurs actionneurs de natures différentes, par exemple au moins un actionneur électrique et au moins un actionneur hydraulique, ou de natures identiques, par exemple plusieurs actionneurs hydrauliques, peuvent être prévus pour actionner différents mouvements ou degrés de liberté du bras de levage. Par exemple, les différents mouvements peuvent être choisis dans le groupe consistant en : un mouvement de montée-descente, un mouvement d'extension-rétraction et un mouvement d'inclinaison d'un porte-outil.

Selon un mode de réalisation, ledit au moins un moteur électrique comporte un moteur électrique d'actionnement pour l'actionnement du bras de levage, les éléments de batterie étant connectés au moteur électrique d'actionnement via un variateur électrique de vitesse.

Selon un mode de réalisation, le au moins un moteur électrique d'actionnement comporte au moins un vérin électrique configuré pour actionner au moins un mouvement du bras de levage.

Selon un mode de réalisation, l'engin de travail comprend en outre une pompe hydraulique couplée au moteur électrique d'actionnement et au moins un actionneur hydraulique alimenté par la pompe hydraulique pour actionner au moins un mouvement du bras de levage.

Dans le cas d'un actionnement électrohydraulique d'un ou plusieurs mouvements du bras de levage et d'un entraînement électrohydraulique d'un ou plusieurs essieux, des pompes hydrauliques indépendantes peuvent être employées ou une pompe hydraulique commune peut être employée. Les pompes hydrauliques indépendantes peuvent être entraînées par plusieurs moteurs électriques respectifs.

Dans tous les cas, les éléments de batterie peuvent être connectés électriquement à un unique moteur électrique ou à plusieurs moteurs électriques pour fournir de la puissance au(x)dit(s) moteur(s) électrique(s) pour la propulsion du châssis et pour l'actionnement du bras de levage.

Selon un mode de réalisation, l'engin de travail comprend en outre une cabine pour un conducteur de l'engin de travail, la cabine étant située en saillie sur un côté latéral du châssis de l'engin de travail.

Le poids de la cabine peut être équilibré de différentes manières, notamment indépendamment du poids des éléments de batterie qui sont situés entre les deux longerons de l'engin de travail. Par exemple le poids de la cabine peut être équilibré par des éléments situés dans un compartiment en saillie sur un deuxième côté latéral du châssis de l'engin de travail, à l'opposé de la cabine. Ces éléments peuvent inclure un moteur électrique de propulsion, un moteur électrique d'actionnement, une pompe hydraulique, un réservoir de liquide hydraulique et/ou d'autres éléments.

Le ou les moteurs électriques peuvent être disposés à divers endroits dans l'engin de travail. Selon un mode de réalisation, un moteur électrique de propulsion et/ou un moteur électrique d'actionnement, est situé entre les deux longerons ou sous les deux longerons.

Selon un mode de réalisation, le châssis comporte un logement recevant les éléments de batterie, le logement présentant une ouverture débouchant vers une direction choisie parmi l'avant de l'engin de travail, l'arrière de l'engin de travail, le dessus du châssis, le dessous du châssis et une direction latérale opposée à une cabine de l'engin de travail.

Selon un mode de réalisation, le logement présente une surface inférieure sur laquelle les éléments de batterie reposent directement ou indirectement.

On entend par « reposent directement » le fait que les éléments de batterie reposent sur la surface inférieure sans pièce interposée entre les éléments de batterie et la surface inférieure. Inversement, « reposent indirectement » signifie qu'au moins une pièce est interposée entre la surface inférieure et les éléments de batterie.

Selon un mode de réalisation, la surface inférieure est inclinée vers la surface du sol dans une direction qui s'éloigne de l'ouverture.

Selon un mode de réalisation, l'ouverture du logement est obturée par une grille d'aération.

Selon un mode de réalisation, le logement présente un orifice d'aération distant de l'ouverture, pouvant être situé à une extrémité opposée à la grille d'aération ou à un autre endroit.

Ces caractéristiques permettent de créer une convection d'air autour de l'ensemble de batteries, qui tend à limiter le risque de surchauffe accidentelle des éléments de batterie constituant.

Selon un mode de réalisation, un arbre d'un moteur électrique de propulsion s'étend jusque sous le logement.

Selon un mode de réalisation, l'engin de travail en outre des éléments de batterie supplémentaires pour fournir de la puissance électrique audit au moins un moteur électrique de l'engin de travail, les éléments de batterie supplémentaires étant disposés entre les deux longerons, et le châssis comporte un logement supplémentaire recevant les éléments de batterie supplémentaires, le logement supplémentaire présentant une ouverture débouchant vers l'arrière de l'engin de travail et une surface inférieure sur laquelle les éléments de batterie supplémentaires reposent directement ou indirectement.

Les éléments de batterie supplémentaires permettent d'accroître l'autonomie et/ou la puissance de l'engin de travail.

Selon un mode de réalisation, les éléments de batterie supplémentaire reposent sur un plateau, le plateau reposant sur la surface inférieure du logement supplémentaire et présentant un rebord qui obture l'ouverture du logement supplémentaire lorsque les éléments de batterie supplémentaires sont reçus dans le logement supplémentaire.

Selon un mode de réalisation, la surface inférieure du logement supplémentaire est inclinée vers la surface du sol dans une direction qui s'éloigne de l'ouverture du logement supplémentaire.

Selon un mode de réalisation, le rebord est pourvu d'au moins une grille d'aération.

Selon un mode de réalisation, le logement supplémentaire présente un orifice d'aération à une extrémité opposée à ladite au moins une grille d'aération du rebord.

Selon des modes de réalisation, les éléments de batterie peuvent être fournis sous la forme d'un ensemble de batteries conforme à un deuxième objet de l'invention.

Une autre idée à la base de l'invention est de proposer des ensembles de batteries qui peuvent être aisément insérés entre les deux longerons.

Selon le deuxième objet, l'invention propose ainsi un ensemble de batteries globalement parallélépipédique configuré pour fournir de la puissance électrique à un engin de travail,
l'ensemble de batteries comprenant :
- une plaque de support ;
- au moins deux éléments de batterie fixés à une face supérieure de la plaque de support par rapport à une direction de hauteur de l'ensemble de batteries ;
- un boîtier de connexion électrique connecté électriquement aux éléments de batterie ; et
- une prise de sortie de puissance connectée électriquement à une sortie du boîtier de connexion électrique et connectable électriquement à une prise d'entrée de puissance de l'engin de travail,
l'ensemble de batteries présentant une plus grande largeur ℓ dans une direction de largeur de l'ensemble de batteries, une plus grande longueur L dans une direction de longueur de l'ensemble de batteries, et une plus grande hauteur h dans la direction de hauteur de l'ensemble de batteries, la plus grande longueur L étant supérieure à la plus grande largeur ℓ, la plus grande longueur L et la plus grande hauteur h vérifiant l'inégalité h/L ≤ 0,40.

Selon des modes de réalisation, un tel ensemble de batteries peut présenter une ou plusieurs des caractéristiques suivantes.

Selon un mode de réalisation, la plus grande largeur ℓ et la plus grande hauteur h vérifient l'inégalité h/ℓ ≤ 0,60.

Selon un mode de réalisation, la plus grande longueur L et la plus grande largeur ℓ vérifient l'inégalité ℓ/L ≤ 0,30.

Selon un mode de réalisation, la plaque de support comporte une pluralité de patins en polymère sur une face inférieure opposée à la face supérieure à laquelle les éléments de batterie sont fixés.

Selon un mode de réalisation, la plaque de support présente, à l'une de ses extrémités dans la direction de longueur, deux orifices traversants, les orifices traversants étant dimensionnés pour permettre à un opérateur humain de soulever l'ensemble de batteries par ladite extrémité en saisissant la plaque de support par les deux orifices traversants.

Selon un mode de réalisation, la plaque de support porte une pluralité d'éléments saillants dans la direction de largeur et/ou dans la direction de longueur, les éléments saillants étant aptes à coopérer avec des éléments d'élingage.

Selon un mode de réalisation, les éléments de batterie sont des éléments de batterie lithium-ion.

Selon un mode de réalisation, l'ensemble de batteries comporte en outre au moins un galet monté libre en rotation sur une surface supérieure de l'ensemble de batteries, le galet étant destiné à rouler contre une surface de l'engin de travail lors d'un déplacement de l'ensemble de batteries dans la direction de longueur.

Selon un mode de réalisation, la plaque de support présente une pluralité de lumières, les lumières étant alignées les unes avec les autres dans la direction de longueur de l'ensemble de batteries et agencées de façon à pouvoir coopérer avec une roue dentée lors d'un déplacement de la plaque de support dans la direction de longueur.

Selon un mode de réalisation, l'ensemble de batteries comporte en outre un plot saillant à une extrémité longitudinale de l'ensemble de batteries, le plot saillant étant destiné à coopérer avec un orifice de centrage situé dans l'engin de travail.

Selon un mode de réalisation, l'invention propose aussi un engin de travail selon l'un quelconque des modes de réalisation décrits ci-dessus, dans lequel l'ensemble de batteries est selon l'un quelconque des modes de réalisation qui viennent d'être décrits, et l'ensemble de batteries est disposé entre les deux longerons.

Selon un mode de réalisation, le logement recevant l'ensemble de batteries présente une surface supérieure en regard de la surface inférieure, la surface supérieure présentant un pan incliné de telle sorte qu'une section transversale du logement s'élargit en allant vers l'ouverture.

Selon un mode de réalisation, l'ensemble de batteries comporte le au moins un galet monté libre en rotation mentionné ci-dessus, et le galet est agencé pour coopérer avec le pan incliné lorsque l'ensemble de batteries est extrait du logement par l'ouverture du logement.

Selon un mode de réalisation, l'ensemble de batteries comporte la pluralité de lumières mentionnées ci-dessus, et le châssis comporte un arbre situé au voisinage de l'ouverture du logement, l'arbre portant une roue dentée agencée de façon à pouvoir coopérer avec les lumières de la plaque de support et ainsi déplacer la plaque de support en translation lorsque l'arbre est entraîné en rotation.

Selon un mode de réalisation, l'ensemble de batteries comporte le plot saillant mentionné ci-dessus, le plot saillant étant reçu dans un orifice de centrage situé à une extrémité du logement qui est opposée à l'ouverture du logement.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1A] La [Fig.1A] est une vue en perspective d'un engin de travail.
[Fig.1B] La [Fig.1B] est une vue partielle en perspective de l'arrière de l'engin de travail de la [Fig.1A].
[Fig.1C] La [Fig.1C] est une vue de côté du châssis de l'engin de travail de la [Fig.1A].
[Fig.2] La [Fig.2] est une vue en section de l'engin de travail de la [Fig.1A], depuis le dessous de l'engin de travail.
[Fig.3] La [Fig.3] est une vue en perspective du châssis de l'engin de travail de la [Fig.1A].
[Fig.4] La [Fig.4] est une vue de côté du châssis de la [Fig.3], l'un des longerons du châssis ayant été enlevé afin de montrer les ensembles de batteries insérés dans le châssis.
[Fig.5A] La [Fig.5A] est une vue en perspective d'un ensemble de batteries qui peut être inséré dans le châssis des figures 3 et 4.
[Fig.5B] La [Fig.5B] est une vue de dessus de l'ensemble de batteries.
[Fig.5C] La [Fig.5C] est une vue de face de l'ensemble de batteries.
[Fig.5D] La [Fig.5D] est une vue de côté de l'ensemble de batteries.
[Fig.6A] La [Fig.6A] est une vue éclatée d'un module de batteries pouvant être utilisé pour réaliser l'ensemble de batteries de la [Fig.5A].
[Fig.6B] La [Fig.6B] est une vue éclatée de l'ensemble de batteries de la [Fig.5A].
[Fig.7] La [Fig.7] est un agrandissement du détail VII de la [Fig.5B].
[Fig.8A] La [Fig.8A] est une vue en perspective d'un ensemble de batteries supplémentaire qui peut être inséré dans le châssis des figures 2 et 5.
[Fig.8B] La [Fig.8B] est une vue de dessus de l'ensemble de batteries supplémentaire.
[Fig.8C] La [Fig.8C] est une vue de face de l'ensemble de batteries supplémentaire.
[Fig.8D] La [Fig.8D] est une vue de côté de l'ensemble de batteries supplémentaire.
[Fig.9] La [Fig.9] est une vue en perspective montrant un moteur électrique pour la propulsion du châssis et une chaîne de transmission entre ce moteur électrique et les essieux.
[Fig.10] La [Fig.10] est un diagramme fonctionnel représentant l'alimentation électrique de l'engin de travail des figures 1 à 5 à l'aide de l'ensemble de batteries et de l'ensemble de batteries supplémentaire.
[Fig.11A] La [Fig.11A] est une vue partielle en perspective de l'avant de l'engin de travail de la [Fig.1A], montrant l'ensemble de batteries partiellement sorti du châssis.
[Fig.11B] La [Fig.11B] est une vue partielle en perspective montrant la fixation de l'ensemble de batteries à l'avant du châssis.
[Fig.11C] La [Fig.11C] est une vue partielle en perspective montrant la fixation de l'ensemble de batteries à une partie interne du châssis.
[Fig.12] La [Fig.12] est une vue partielle en perspective, montrant la fixation de l'ensemble de batteries supplémentaire à une partie interne du châssis.
[Fig.13A] La [Fig.13A] est une vue en perspective de dessus montrant une variante de l'ensemble de batteries.
[Fig.13B] La [Fig.13B] est une vue en perspective de dessous de l'ensemble de batteries de la [Fig.13A].
[Fig.14A] La [Fig.14A] est une vue analogue à la [Fig.11B], montrant la coopération de l'ensemble de batteries des figures 13A et 13B avec l'avant du châssis.
[Fig.14B] La [Fig.14B] est un agrandissement du détail XIVB de la [Fig.14A].
[Fig.15A] La [Fig.15A] est une vue analogue à la [Fig.4], montrant l'ensemble de batteries en train d'être sorti du châssis.
[Fig.15B] La [Fig.15B] est une vue analogue à la [Fig.15A], montrant aussi l'ensemble de batteries en train d'être sorti du châssis.
[Fig.16] La [Fig.16] est un agrandissement du détail XVI de la [Fig.1B], montrant la fixation de l'ensemble de batteries supplémentaire à l'arrière du châssis.
[Fig.17] La [Fig.17] est une vue partielle en perspective de l'arrière de l'engin de travail, montrant l'ensemble de batteries supplémentaire en train d'être sorti du châssis.
[Fig.18A] La [Fig.18A] est une vue en section partielle analogue à celle de la [Fig.2], montrant une variante de l'engin de travail vue en vue de dessous.
[Fig.18B] La [Fig.18B] est une vue partielle en perspective de l'engin de travail de la [Fig.18A].
[Fig.19A] La [Fig.19A] est une vue en section partielle analogue à celle de la [Fig.2], montrant une autre variante de l'engin de travail vue depuis le dessus.
[Fig.19B] La [Fig.19B] est une vue partielle en perspective de l'engin de travail de la [Fig.19A].
[Fig.20A] La [Fig.20A] est une vue en section partielle analogue à celle de la [Fig.2], montrant encore une autre variante de l'engin de travail vue depuis le dessus.
[Fig.20B] La [Fig.20B] est une vue partielle en perspective de l'engin de travail de la [Fig.20A].
[Fig.21] La [Fig.21] est un diagramme fonctionnel représentant une chaîne de transmission alternative à celle représentée sur la [Fig.9].
[Fig.22] La [Fig.22] est une vue en perspective et de dessous d'encore une autre variante de l'engin de travail.

### Description des modes de réalisation

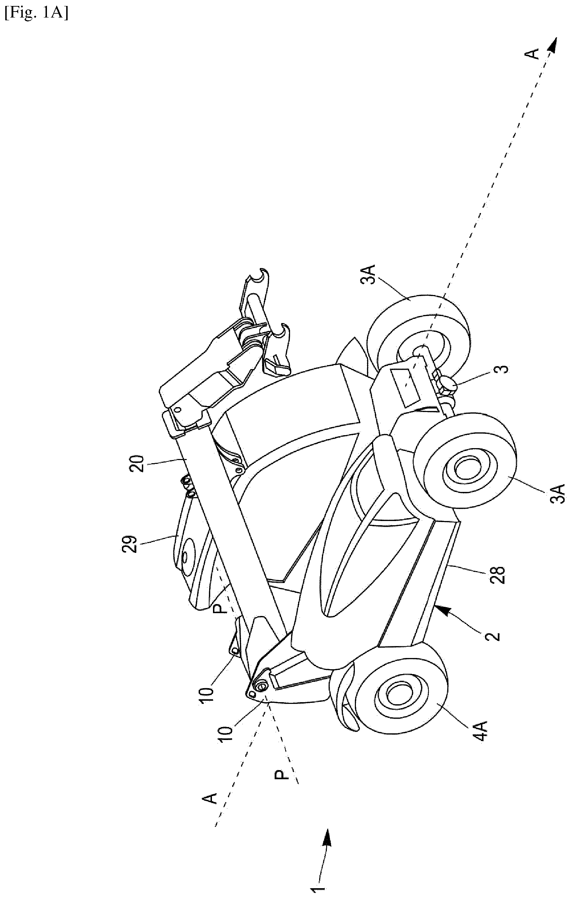

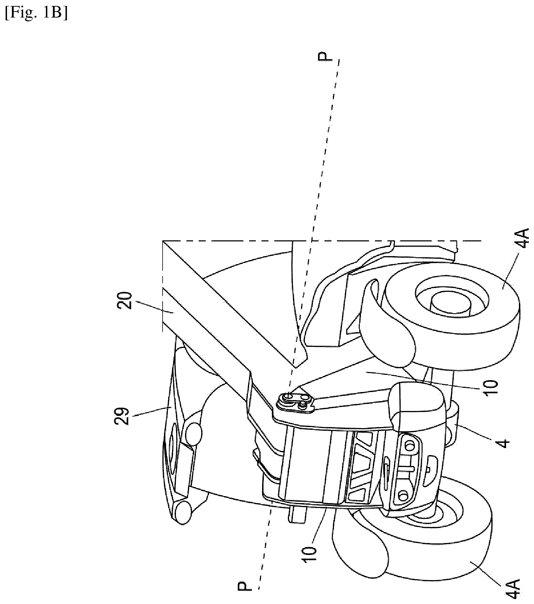

La [Fig.1A] est une vue d'ensemble en perspective d'un engin de travail 1, réalisé ici sous la forme d'un chariot élévateur télescopique. Comme représenté sur cette figure, l'engin de travail 1 comprend un châssis 2 et un bras de levage 20. La flèche A-A représente un axe avant-arrière médian de l'engin de travail 1, aligné avec le milieu des essieux 3 et 4. L'axe avant-arrière médian correspond à une direction longitudinale de l'engin de travail 1. La [Fig.1B] est une vue partielle de l'arrière du même engin de travail 1.

Le châssis 2 est mobile et déplaçable sur la surface du sol (non représentée), ici par le biais d'un essieu avant 3 portant deux roues 3A, l'une à gauche et l'une à droite, et d'un essieu arrière 4 portant deux roues 4A, l'une à gauche et l'une à droite.

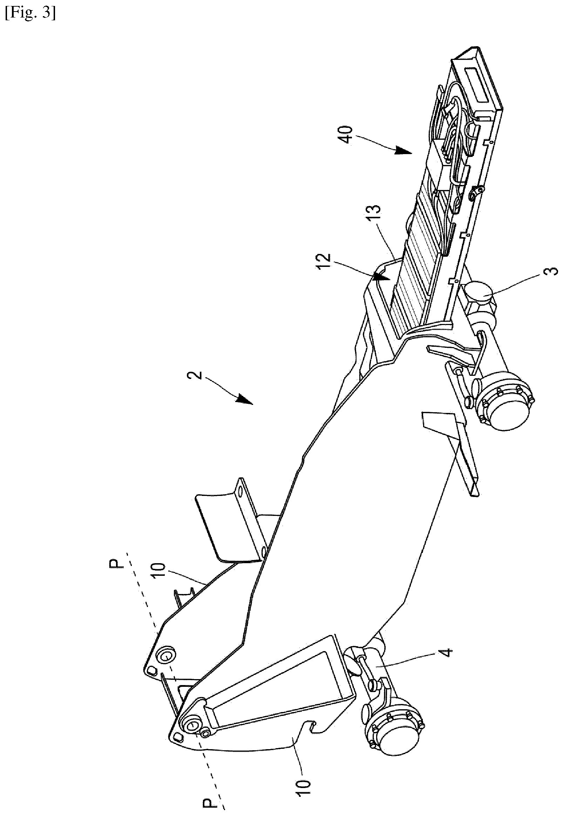

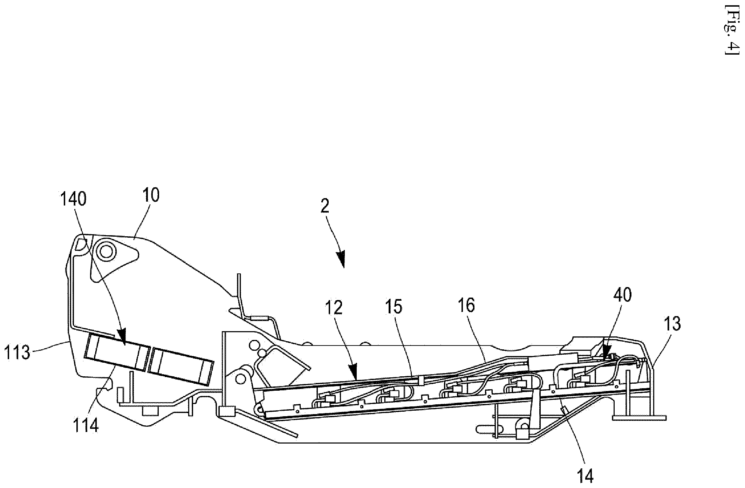

Le châssis 2 comporte deux longerons 10, qui sont mieux visibles en particulier sur les figures 3 et 4. Les longerons 10 sont des pièces métalliques globalement plates, parallèles entre elles et globalement perpendiculaires à une direction de largeur de l'engin de travail. La plus grande dimension des longerons 10 s'étend parallèlement à l'axe avant-arrière A-A de l'engin de travail 1.

Comme représenté sur la [Fig.1A], le bras de levage 20 s'étend lui aussi dans un plan perpendiculaire à la direction de largeur de l'engin de travail. Le bras de levage 20 est articulé aux deux longerons 10, entre les deux longerons 10, de façon à être mobile à pivotement par rapport aux deux longerons 10 autour d'un axe de pivotement P. L'axe de pivotement P est notamment repéré sur la [Fig.1A]. L'axe de pivotement P est parallèle à la direction de largeur de l'engin de travail 1. Les moyens convenables pour rendre le bras de levage 20 mobile à pivotement sont bien connus en tant que tels et ne sont pas décrits en détail ici.

Le bras de levage 20 peut être réalisé de différentes manières, notamment sous la forme de plusieurs sections télescopiques comme représenté, ou en variante sous la forme d'un bras de longueur fixe. Une extrémité du bras de levage 20 opposée à l'axe de pivotement P peut porter un outil de travail ou, comme représenté sur la [Fig.1A], un porte-outil modulaire susceptible de recevoir des outils de travail de plusieurs types, selon la technique connue. Par outil de travail, on désigne par exemple une paire de fourches, un godet, un treuil, une pince, etc.

On voit en outre sur la [Fig.1A] que l'engin de travail 1 comprend une cabine 29 dans laquelle un conducteur de l'engin de travail 1 peut prendre place, et un caisson 28 pouvant recevoir divers équipements servant au fonctionnement de l'engin de travail 1. La cabine 29 et le caisson 28 sont situés ici de part et d'autre des longerons 10, c'est-à-dire que la cabine 29 est située d'un premier côté latéral de l'engin de travail 1, et que le caisson 28 est situé d'un deuxième côté latéral de l'engin de travail, le premier côté latéral et le deuxième côté latéral étant de part et d'autre des deux longerons 10.

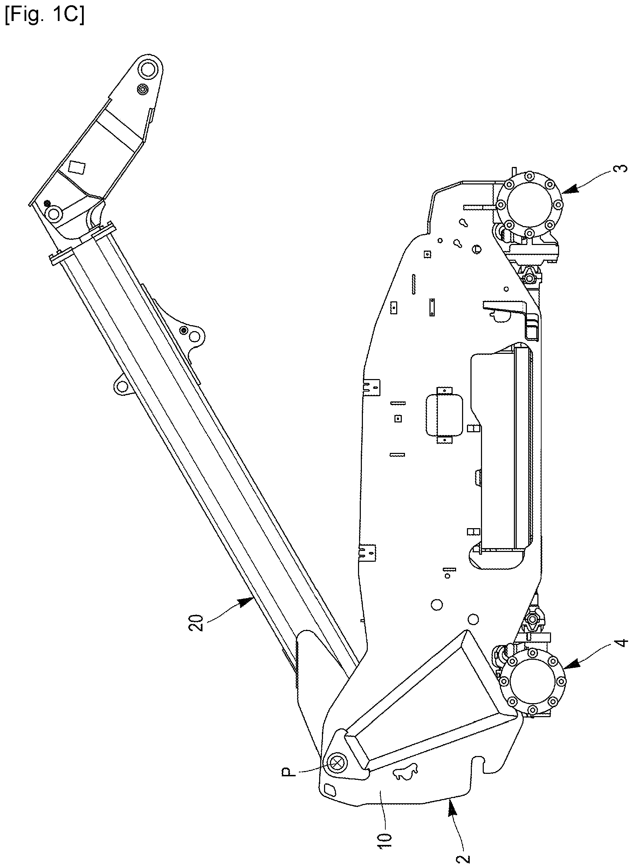

En référence à la [Fig.1C], l'axe de pivotement P est situé en arrière de l'essieu arrière 4 suivant l'axe avant-arrière A-A. Il est en outre situé au-dessus de l'essieu avant 3 et de l'essieu arrière 4 suivant une direction verticale de l'engin de travail 1.

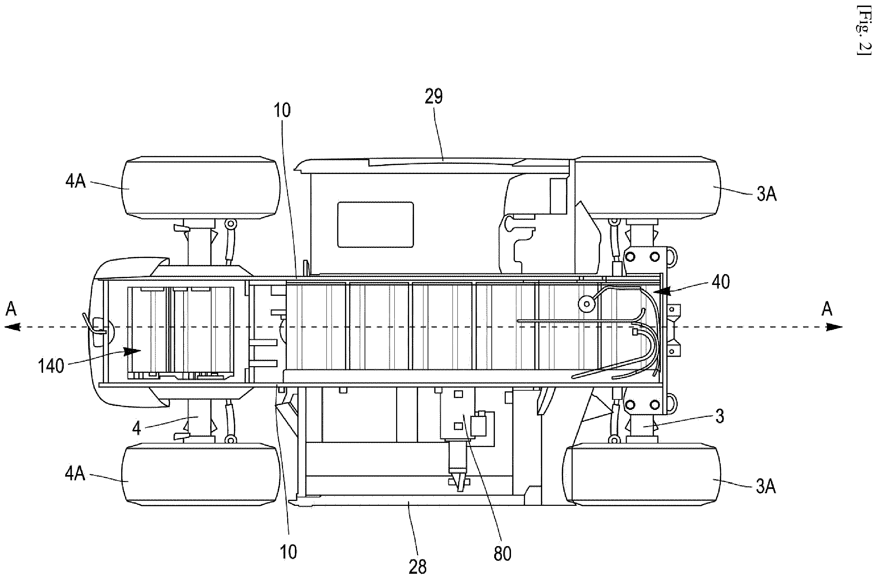

La [Fig.2] est une vue du dessous de l'engin de travail 1. Comme cela est représenté sur cette figure, un ensemble de batteries, désigné globalement par la référence 40, est disposé entre les deux longerons 10. L'ensemble de batteries 40 est connecté à au moins un moteur électrique de l'engin de travail 1, afin d'alimenter en électricité ce au moins un moteur électrique. On a représenté sur la [Fig.2] un moteur électrique 80 pour la propulsion du châssis 2. La transmission de puissance entre l'ensemble de batteries 40, le moteur électrique 80 et les essieux 3 et 4 est décrite en détail plus loin.

Optionnellement, un ensemble de batteries supplémentaire, désigné globalement par la référence 140, est lui aussi disposé entre les deux longerons 10. Cet ensemble de batteries supplémentaire 140 est lui aussi connecté au dit au moins un moteur électrique de l'engin de travail 1, afin d'alimenter en électricité ce au moins un moteur électrique. L'ensemble de batteries supplémentaire 140 permet d'accroître l'autonomie de l'engin de travail 1.

L'ensemble de batteries 40, et le cas échéant l'ensemble de batteries supplémentaire 140, sont réalisés en combinant ensemble plusieurs éléments de batteries, de façon à atteindre une tension aux bornes suffisante pour permettre le fonctionnement de l'engin de travail 1, sans que l'engin de travail 1 doive emporter une autre motorisation telle qu'un moteur à combustion interne. Les éléments de batteries peuvent en principe être de tout type connu, par exemple du type plomb-acide ou lithium-ion, et peuvent être combinés ensemble et installés entre les longerons 10 de diverses manières.

Toutefois, l'espace entre les longerons 10 peut être quelque peu difficile d'accès, en fonction des dimensions de l'engin de travail 1. On décrit ci-après en rapport avec les figures 3 à 17 diverses solutions permettant d'insérer et de retirer aisément l'ensemble de batteries 40 et l'ensemble de batteries supplémentaire 140 d'entre les deux longerons 10.

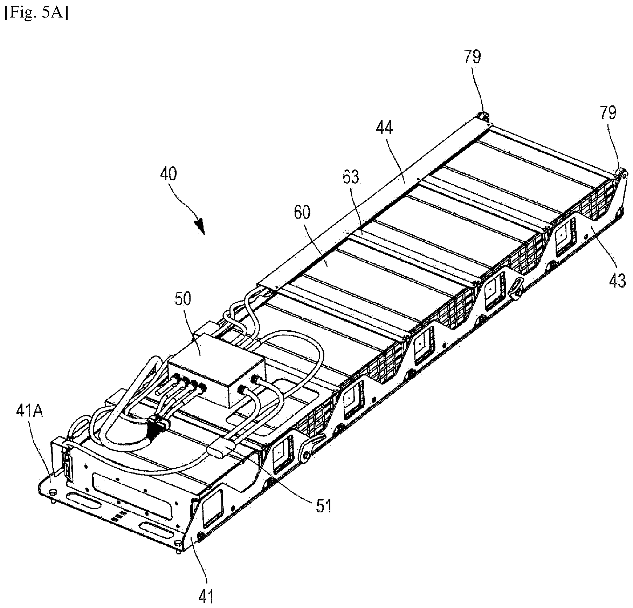

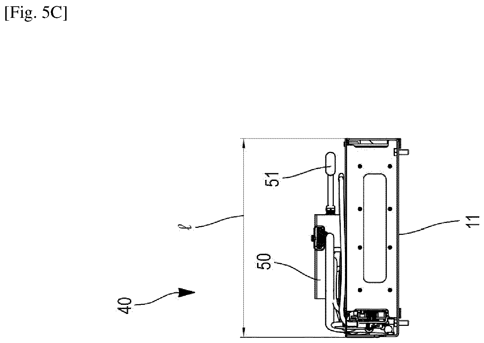

Les figures 5A à 5D sont des vues d'un ensemble de batteries 40 qui est insérable entre les deux longerons 10. La [Fig.3] montre à titre d'illustration cet ensemble de batteries 40 en train d'être inséré entre les longerons 10, ici depuis l'avant de l'engin de travail 1.

Comme cela est représenté sur les figures 5A à 5D, l'ensemble de batteries 40 est globalement parallélépipédique, et comprend une plaque de support 41 et plusieurs éléments de batterie 60 fixés à une face supérieure 41A de la plaque de support 41.

La plaque de support 41 est rigide et peut être réalisée en tout matériau suffisamment résistant pour supporter le poids des éléments de batterie 60, par exemple en acier.

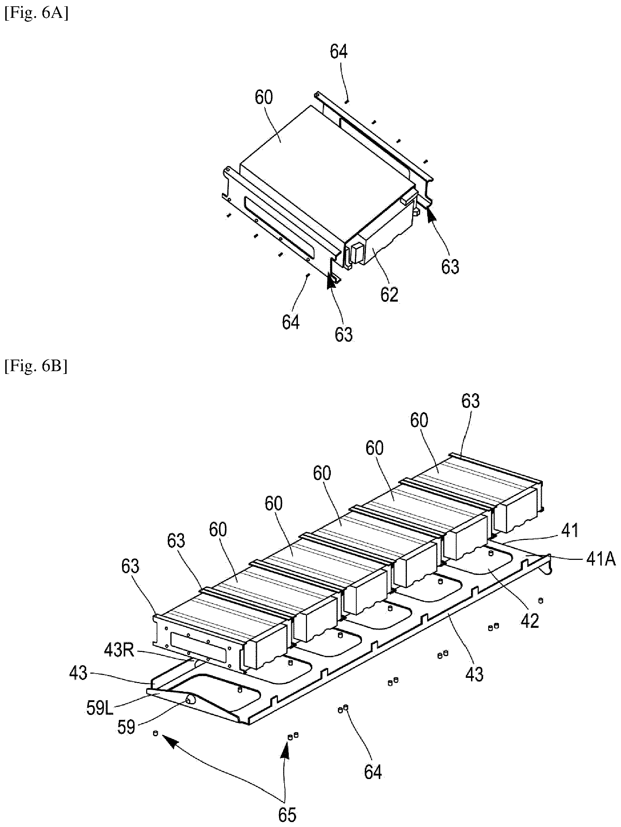

Les figures 6A et 6B sont des vues éclatées qui montrent plus particulièrement l'assemblage des éléments de batterie 60 sur la plaque de support 41. Comme représenté sur la [Fig.6A], chaque élément de batterie 60 comprend un boîtier parallélépipédique 61 renfermant la ou les cellules électrolytiques générant la tension aux bornes de l'élément de batterie 60. De préférence, l'élément de batterie 60 est du type lithium-ion. L'une des faces du boîtier 61 porte un système de gestion de batterie (« Battery Management System » ou BMS en anglais) 62 qui, de façon connue en soi, surveille et gère la charge et la décharge de l'ensemble des cellules électrolytiques de l'élément de batterie 60. Ce système de gestion de batterie 62 porte également les bornes de sortie de l'élément de batterie 60.

Toujours en se référant à la [Fig.6A], deux éléments de bâti 63 sont rapportés, ici à l'aide de vis 64, sur deux faces opposées du boîtier 61.

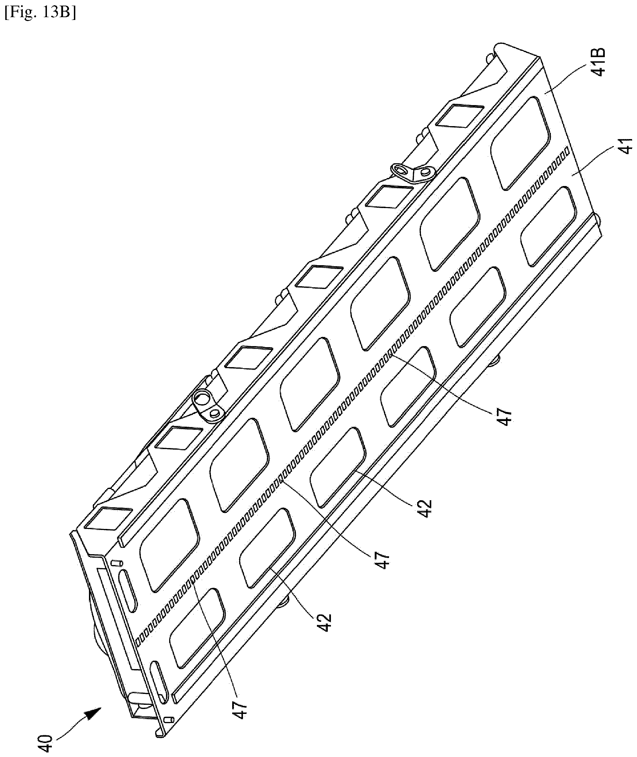

Ensuite, au moins deux (six, sur la [Fig.6B]) ensembles constitués chacun d'un élément de batterie 60 et de deux éléments de bâti 63 sont alignés le long d'une direction de longueur L de l'ensemble de batteries 40. Puis les éléments de bâti 63 sont rapportés à la plaque de support 41, ici à l'aide de vis 65 dont les têtes de vis sont situées du côté de la face inférieure 41B de la plaque de support 41. Ainsi, les éléments de batterie 60 sont fixés à la plaque de support 41 sur sa face supérieure 41A. De façon avantageuse, la plaque de support 41 peut présenter, pour chaque élément de batterie 60, une ([Fig.6B]), deux ([Fig.13B]), ou plus de deux ouvertures d'aération 42 traversant la plaque de support 41 de façon à déboucher sur une face du boîtier 61. Ces ouvertures d'aération 42 permettent de limiter le risque de surchauffe accidentelle des éléments de batterie 60.

Exemple numérique : dans un mode de réalisation, chaque élément de batterie 60 délivre une tension de 48V et une puissance de 4,2kW. Les éléments de batterie 60 sont branchés en série par paires pour fournir à chaque fois une tension de 96V. Les paires d'éléments de batterie 60 sont branchées en parallèle les unes avec les autres, soit trois paires dans le cas de six éléments de batterie 60.

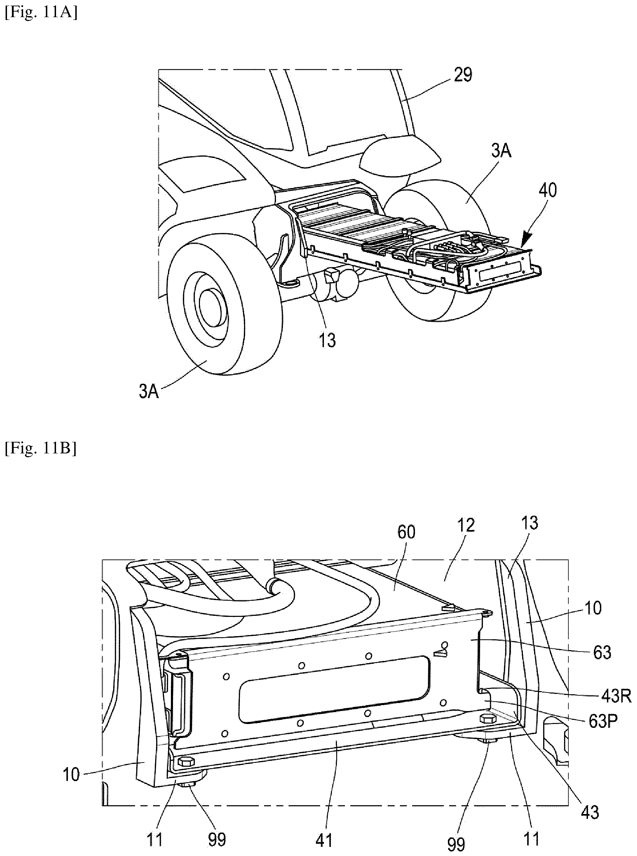

En référence aux figures 5A, 5D, 6B et 11B, un côté de la plaque de support 41 peut être pourvu d'un bord relevé 43 qui contribue à maintenir les éléments de batterie 60 en position par rapport à la plaque de support 41. Comme cela est mieux visible sur la [Fig.11B], ce bord relevé 43 peut être pourvu d'orifices traversants 43R, chaque orifice traversant 43R recevant une portion saillante 63P d'un élément de bâti 63. Le bord relevé 43 peut être réalisé de diverses manières, soit sous la forme d'une pièce rapportée à la plaque de support 41, soit d'un seul tenant avec la plaque de support 41.

En revenant maintenant aux figures 5A à 5D, après que les éléments de batterie 60 ont été fixés à la plaque de support 41, les éléments de batterie 60 sont connectés électriquement à un boîtier de connexion électrique 50.

Un guide de câbles 44 peut être installé sur un côté de l'ensemble de batteries 40 afin de maintenir en place et protéger les câbles électriques connectant électriquement les éléments de batterie 60 au boîtier de connexion électrique 50. Ce guide de câbles 44 peut par exemple être rapporté à certains des éléments de bâti 63.

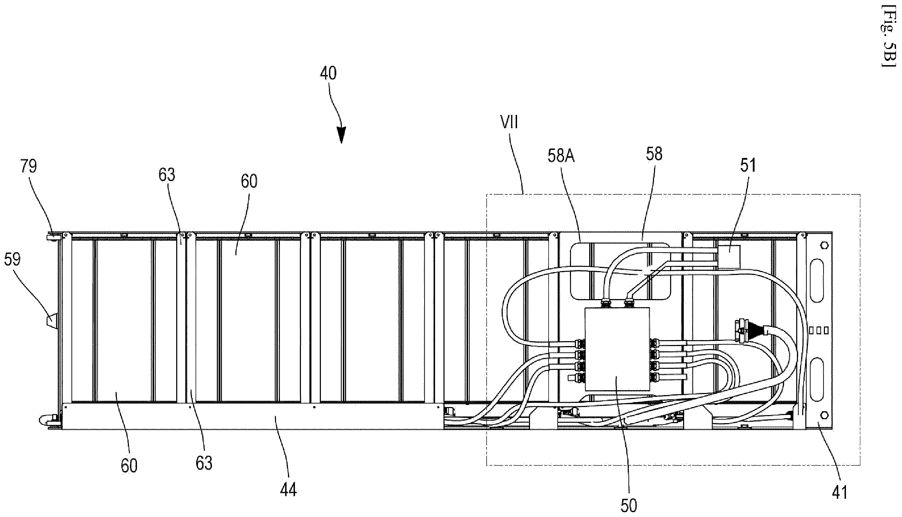

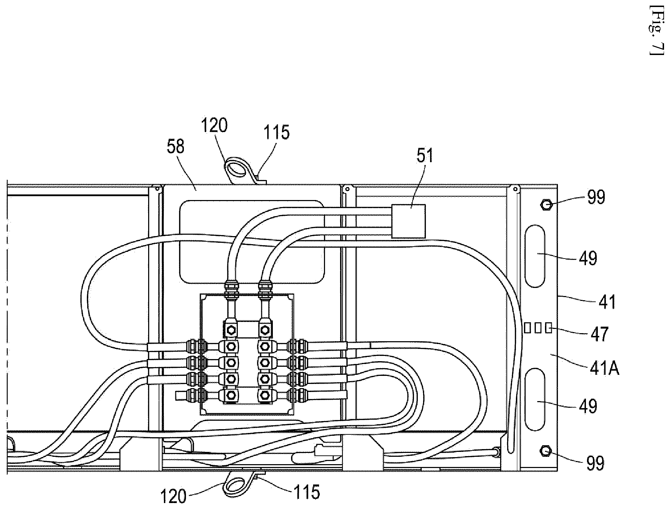

En référence aux figures 5A, 5B et 7, le boîtier de connexion électrique 50 peut être fixé à une plaque de support 58 interposée entre le boîtier de connexion électrique 50 et les éléments de batterie 60. La plaque de support 58 peut être rapportée à certains des éléments de bâti 63. La plaque de support 58 peut présenter une ouverture d'aération 58A permettant de limiter le risque de surchauffe accidentelle des éléments de batterie 60.

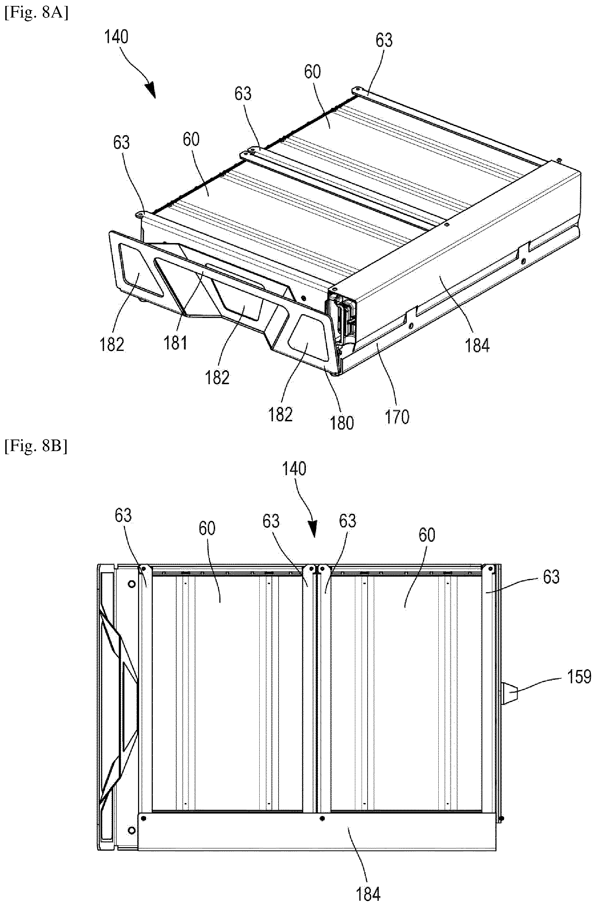

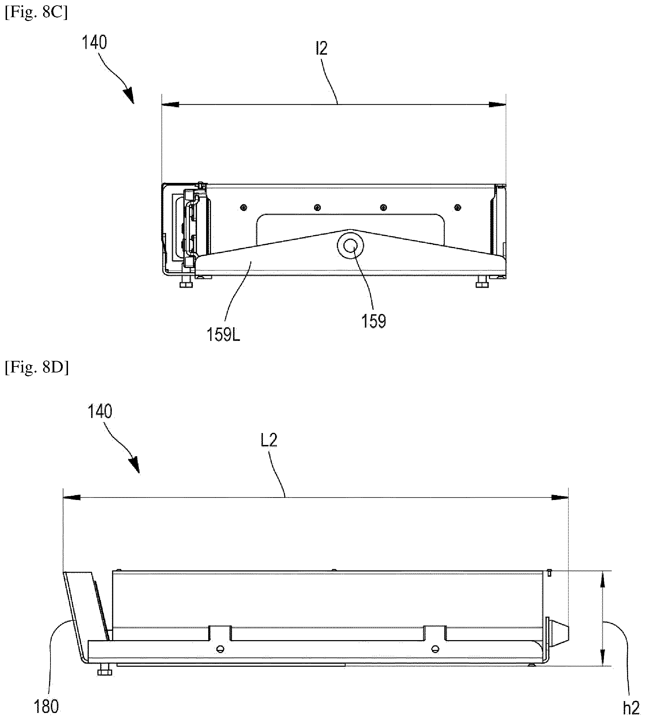

L'ensemble de batteries 40 présente en outre une prise de sortie de puissance 51 permettant le raccordement électrique de l'ensemble de batteries 40 à une prise d'entrée de puissance 400 (non représentée sur les figures 8A à 8D) de l'engin de travail 1. La prise de sortie de puissance 51 est destinée à être connectée électriquement à une sortie du boîtier de connexion électrique 50.

Après que les éléments de batterie 60 et le boîtier de connexion électrique 50 ont été fixés à la plaque de support 41, que les éléments de batterie 60 ont été connectés électriquement au boîtier de connexion électrique 50, et que le boîtier de connexion électrique 50 a été connecté électriquement à la prise de sortie de puissance 51, l'ensemble de batteries 40 est prêt à être inséré entre les deux longerons 10 de l'engin de travail 1.

Toujours en référence aux figures 5A à 5D, l'ensemble de batteries 40 présente une plus grande largeur ℓ dans une direction de largeur de l'ensemble de batteries 40, une plus grande longueur L dans une direction de longueur de l'ensemble de batteries 40, et une plus grande hauteur h dans une direction de hauteur de l'ensemble de batteries 40, la plus grande longueur L étant supérieure à la plus grande largeur ℓ.

La plus grande longueur L et la plus grande hauteur h vérifient l'inégalité h/L ≤ 0,40. Ceci signifie que h est relativement faible par rapport à L, ce qui donne à l'ensemble de batteries 40 une forme relativement plate et allongée, qui permet de positionner l'ensemble de batteries 40 dans un logement 12 relativement long et d'une hauteur relativement faible, comme on va le décrire ci-après.

En outre, la plus grande largeur ℓ et la plus grande hauteur h peuvent vérifier l'inégalité h/ℓ ≤ 0,60, et/ou la plus grande longueur L et la plus grande largeur ℓ peuvent vérifier l'inégalité ℓ/L ≤ 0,30.

Comme on l'a mentionné ci-dessus, l'ensemble de batteries 40 est configuré de façon à pouvoir être inséré entre les deux longerons 10 de l'engin de travail 1, dans un état où les éléments de batterie 60 sont connectés électriquement au boîtier de connexion électrique 50 et le boîtier de connexion électrique 50 est connecté électriquement à la prise de sortie de puissance 51.

Pour un engin de travail 1 de dimensions importantes, l'ensemble de batteries 40 peut présenter une masse supérieure à 100 kg voire supérieure à 200 kg, qui est trop importante pour permettre à des opérateurs humains de manipuler l'ensemble de batteries 40 sans outils. Certaines des caractéristiques décrites ci-après de l'ensemble de batteries 40 et/ou de l'engin de travail 1 permettent de faciliter la manipulation et l'insertion de l'ensemble de batteries 40 entre les longerons 10.

Comme cela est mieux visible sur la [Fig.4], l'ensemble de batteries 40 est reçu dans un logement 12 ménagé dans le châssis 2 entre les longerons 10. Les parois latérales du logement 12 sont définies par des surfaces latérales des longerons 10. Le logement 12 présente en outre une surface inférieure 14 et une surface supérieure 15 espacée de la surface inférieure 14. La plaque de support 41 sur la surface inférieure 14 repose lorsque l'ensemble de batteries 40 est en place dans le logement 12.

La plus grande dimension du logement 12 est selon l'axe avant-arrière A-A de l'engin de travail 1. Comme cela est visible sur les figures, l'ensemble de batteries 40 est inséré dans le logement 12 de sorte que sa direction de plus grande longueur soit selon la plus grande dimension du logement 12.

De façon non représentée sur les dessins, la face inférieure 41B de la plaque de support 41 peut être pourvue d'une pluralité de patins en polymère, afin de diminuer la friction entre la plaque de support 41 et la surface inférieure 14 du logement 12 lors de l'insertion de l'ensemble de batteries 40 dans le logement 12.

Comme cela est mieux visible sur les figures 3 et 11A, le logement 12 présente une ouverture 13 qui est située à l'avant de l'engin de travail 1 suivant l'axe avant-arrière A-A.

Comme représenté sur la [Fig.11B], chaque longeron 10 est pourvu d'un épaulement 11 au voisinage de l'ouverture 13. Ces épaulements 11 permettent de fixer une extrémité de la plaque de support 41 aux longerons 10 lorsque l'ensemble de batteries 40 est en place dans le logement 12. Dans l'exemple représenté sur la [Fig.11B], cette fixation de la plaque de support 41 aux épaulements 11 est effectuée à l'aide de boulons 99, mais d'autres types de fixation sont envisageables.

Comme cela est visible en particulier sur les figures 5B, 7 et 13A, à son extrémité longitudinale destinée à être fixée aux épaulements 11, la plaque de support 41 peut présenter deux orifices traversants 49. Les orifices traversants 49 sont dimensionnés pour permettre à un opérateur humain de de soulever l'ensemble de batteries par ladite extrémité en saisissant la plaque de support par les deux orifices traversants 49. Les orifices traversants 49 peuvent être de toute forme adaptée, par exemple elliptique, rectangulaire, ou comme représenté sur les dessins, en forme de rectangle complété par deux demi-cercles au niveau de deux côtés opposés du rectangle.

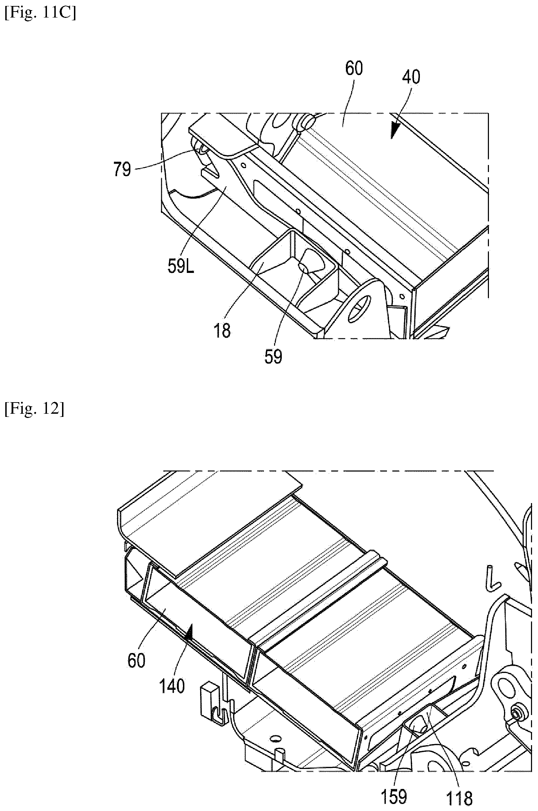

Les figures 5B et 6B montrent en outre qu'à son extrémité longitudinale opposée à celle présentant les orifices traversants 49, la plaque de support 41 peut être pourvue d'un plot saillant 59, de forme cylindrique ou plus préférablement tronconique. Le plot saillant 59 est ici porté par un rebord longitudinal 59L, lequel peut être rapporté à la plaque de support 41 ou bien formé d'un seul tenant avec la plaque de support 41. Comme cela est représenté sur la [Fig.11C], à son extrémité opposée à l'ouverture 13, le logement 12 présente une pièce de centrage 18 muni d'un orifice de centrage (non référencé). Le plot saillant 59 et l'orifice de centrage sont dimensionnés de sorte que le plot saillant 59 est reçu dans l'orifice de centrage lorsque l'ensemble de batteries 40 est à son emplacement prévu dans le logement 12. Le plot saillant 59 et l'orifice de centrage tendent à faciliter la mise en place de l'ensemble de batteries 40 dans le logement 12.

De façon avantageuse, comme cela est visible sur la [Fig.4], la surface inférieure 14 est inclinée vers le sol dans une direction qui s'éloigne de l'ouverture 13. Cette inclinaison vers la surface du sol facilite l'insertion de l'ensemble de batteries 40 dans le logement 12, et tend à empêcher que l'ensemble de batteries 40 ne sorte accidentellement du logement 12 lorsque l'engin de travail 1 est en mouvement, y compris sur un sol incliné.

De façon non représentée sur les dessins, l'ouverture 13 peut être obturée par une grille d'aération. En outre, à l'extrémité du logement 12 qui est opposée à l'ouverture 13, le logement 12 peut présenter un orifice d'aération (non représenté sur les dessins). Grâce à cette grille d'aération et à cet orifice d'aération, il peut se produire une convection d'air à travers le logement 12 qui tend à encore réduire le risque de surchauffe accidentelle des éléments de batterie 60.

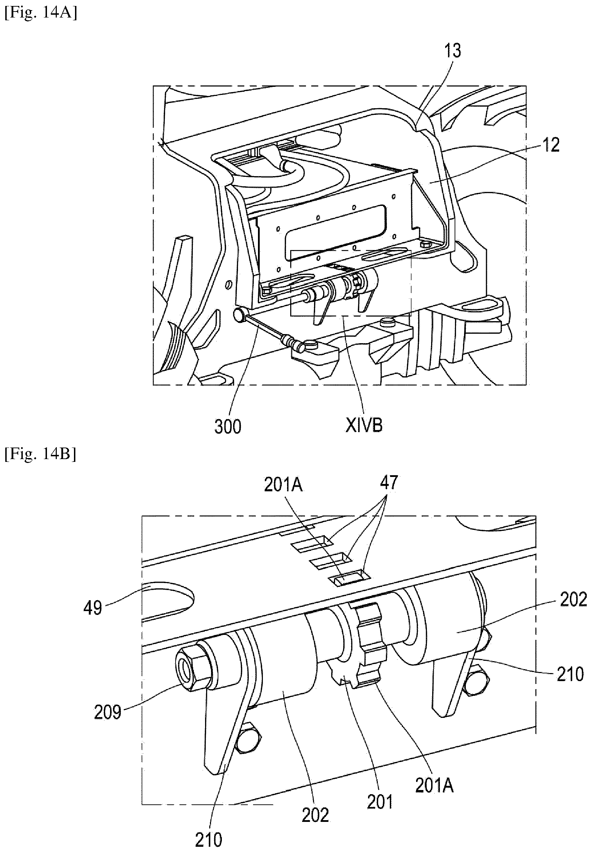

Comme cela est visible sur les figures, et en particulier sur la [Fig.13B] qui montre l'ensemble de batteries 40 du côté de la face inférieure 41B de la plaque de support 41, la plaque de support 41 peut comporter une pluralité de lumières 47 alignées les unes avec les autres selon la direction de longueur de l'ensemble de batteries 40. Dans ce cas, le châssis 2 est muni d'une roue dentée 201 portée par un arbre 200, lesquels sont visibles sur les figures 14A et 14B. L'arbre 200 est monté libre en rotation entre deux plaquettes 210 espacées et situées au voisinage de l'ouverture 13 du logement 12. Des paliers 210 maintiennent la roue dentée 201 en position par rapport aux plaquettes 210. À l'une de ses extrémités, l'arbre 200 est muni d'une empreinte 209 qui permet à l'arbre 200 d'être entraîné en rotation par un outil 300. L'outil 300 est ici une manivelle actionnable par un opérateur humain, mais tout autre type d'outil peut convenir. En tout état de cause, lorsque l'arbre 200 est entraîné en rotation, les dents 201A de la roue dentée 201 coopèrent avec les lumières 47 de la plaque de support 41, à la manière d'un pignon et d'une crémaillère, ce qui déplace la plaque de support 41 et donc l'ensemble de batteries 40 en translation. Ceci permet à un opérateur de commencer à extraire l'ensemble de batteries 40 du logement 12 à l'aide de l'outil 300, après avoir ôté les boulons 99.

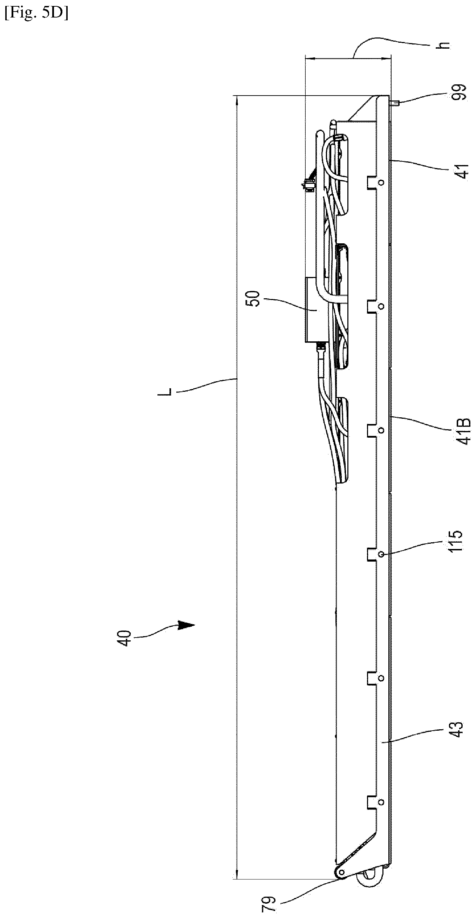

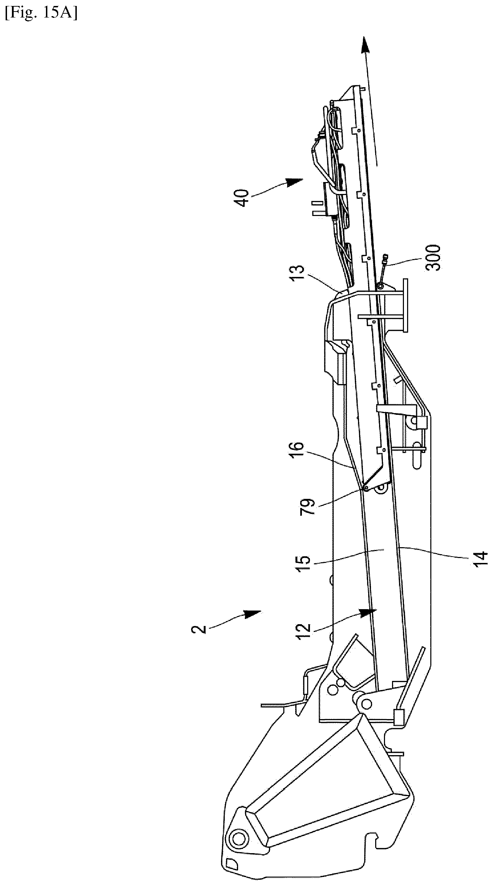

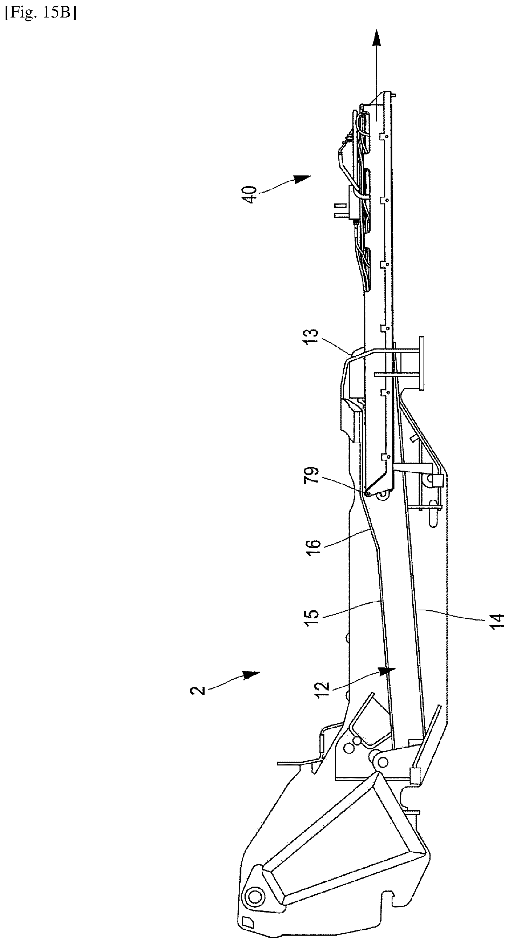

En référence aux figures 5A, 5B et 5D, l'ensemble de batteries 40 peut comporter en outre deux galets 79 montés libres en rotation au niveau de sa surface supérieure. Les galets 79 sont ici portés par le rebord 43 de la plaque de support 41. En référence avec la [Fig.4], la surface supérieure 15 du logement 12 présente un pan 16 qui est incliné de sorte qu'une section transversale du logement 12 s'élargit en allant vers l'ouverture 13. Les figures 15A et 15B montrent ensemble que lorsque l'ensemble de batteries 40 est extrait du logement 12, les galets 79 coopèrent avec le pan incliné 16. Cette coopération tend à faciliter l'opération d'extraction de l'ensemble de batteries 40 du logement 12. Il est bien entendu que le nombre et/ou les dimensions et/ou le positionnement des galets 79 peut être modifié tant que cette coopération avec le pan incliné 16 est présente.

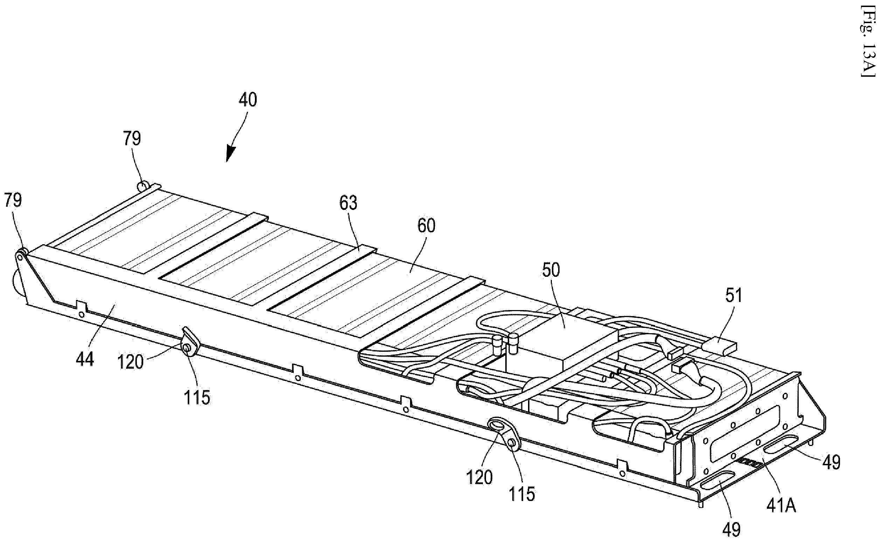

En référence aux figures 7, 13A et 13B, la plaque de support 41 peut porter sur ses deux plus longs côtés une pluralité d'éléments saillants 115. Ces éléments saillants 115 sont aptes à coopérer avec des éléments d'élingage. Ainsi, après avoir partiellement extrait l'ensemble de batteries 40 du logement 12 comme montré sur la [Fig.15B], l'opérateur peut installer des éléments d'élingage, qui sont ici des œillets d'élingage 120, sur les éléments saillants 115, et ensuite installer des élingues sur les éléments d'élingage, ce qui permet de soulever et déplacer l'ensemble de batteries 40.

En complément ou en alternative, il est également possible de déplacer l'ensemble de batteries 40 à l'aide d'un engin tel qu'un chariot élévateur.

Comme on l'a mentionné ci-dessus, un ensemble de batteries supplémentaire 140 peut être disposé entre les deux longerons 10. On va maintenant décrire cet ensemble de batteries supplémentaire 140 en référence aux figures 8A à 8D et 16 et 17.

Les figures 8A à 8D montrent que l'ensemble de batteries supplémentaire 140 présente une forme globalement parallélépipédique, et comporte des éléments de batterie 60 et des éléments de bâti 63 identiques à ceux décrits ci-dessus en rapport avec l'ensemble de batteries 40. Ici, l'ensemble de batteries supplémentaire 140 comporte deux éléments de batterie 60. De façon non représentée sur les dessins, les éléments de batterie 60 sont connectés électriquement les uns aux autres et à une prise de sortie de puissance supplémentaire 151 (non représentée sur les figures 8A à 8D) permettant le raccordement électrique de l'ensemble de batteries supplémentaire 140 au boîtier de connexion électrique 50 de l'ensemble de batteries 40. Un guide de câbles 184 peut être installé sur un côté de l'ensemble de batterie supplémentaire 140 afin de maintenir en place et protéger les câbles électriques réalisant ces connexions électriques.

En variante, l'ensemble de batteries supplémentaire 140 peut être réalisé avec des éléments de batterie d'une construction et/ou d'un type différent de celui des éléments de batterie 60.

Toujours en référence aux figures 8A à 8D, l'ensemble de batteries supplémentaire 40 présente une plus grande largeur ℓ2 dans une direction de largeur de l'ensemble de batteries supplémentaire 140, une plus grande longueur L2 dans une direction de longueur de l'ensemble de batteries supplémentaire 140, et une plus grande hauteur h2 dans une direction de hauteur de l'ensemble de batteries supplémentaire 140, la plus grande longueur L2 étant supérieure à la plus grande largeur ℓ2.

La plus grande longueur L2 et la plus grande hauteur h2 vérifient l'inégalité h2/L2 ≤ 0,20. Ceci signifie que h2 est relativement faible par rapport à L2, ce qui donne à l'ensemble de batteries supplémentaire 140 une forme relativement plate et allongée, qui permet de positionner l'ensemble de batteries supplémentaire 140 dans un logement 112 relativement long et d'une hauteur relativement faible, comme on va le décrire ci-après.

En outre, la plus grande largeur ℓ2 et la plus grande hauteur h2 peuvent vérifier l'inégalité h2/ℓ2 ≤ 0,30, et/ou la plus grande longueur L2 et la plus grande largeur ℓ2 peuvent vérifier l'inégalité ℓ2/L2 ≤ 0,70.

Toujours en référence aux figures 8A à 8D, les éléments de batterie 60 de l'ensemble de batteries supplémentaire 140 reposent sur un plateau 170. Les éléments de batterie 60 sont par exemple rapportés au plateau 170 par les éléments de bâti 63. Le plateau 170 présente un rebord 180. De façon avantageuse, le rebord 180 présente une poignée 181 qui permet à un opérateur de manipuler l'ensemble de batteries supplémentaire 140.

En revenant à la [Fig.4], l'ensemble de batteries supplémentaire 140 est reçu dans un logement supplémentaire 112 ménagé dans le châssis 2 entre les longerons 10. Les parois latérales du logement supplémentaire 112 peuvent être définies par des surfaces latérales des longerons 10. Le logement supplémentaire 112 présente en outre une surface inférieure 113 sur laquelle le plateau 170 repose lorsque l'ensemble de batteries supplémentaire 140 est reçu dans le logement supplémentaire 112.

De façon non représentée sur les dessins, la face du plateau 170 opposée à celle sur laquelle reposent les éléments de batterie 60 peut être pourvue d'une pluralité de patins en polymère, afin de diminuer la friction entre le plateau 170 et la surface inférieure 114 du logement supplémentaire 112 lors de l'insertion de l'ensemble de batteries supplémentaire 140 dans le logement supplémentaire 112.

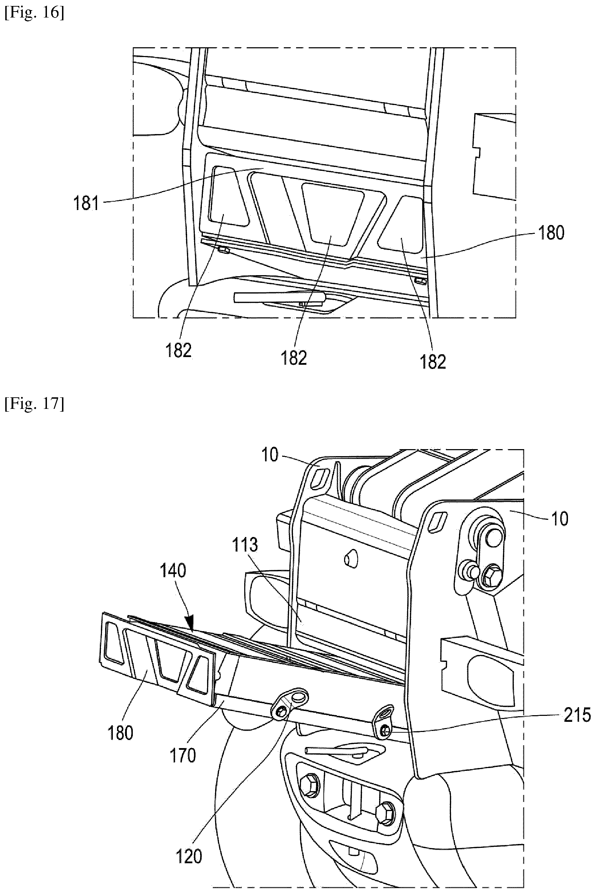

Comme cela est mieux visible sur la [Fig.17], le logement supplémentaire 112 présente une ouverture 113 qui est située à l'arrière de l'engin de travail 1 suivant l'axe avant-arrière A-A. La [Fig.16] montre que le rebord 180 obture l'ouverture 113 lorsque l'ensemble de batteries supplémentaire 140 est reçu dans le logement supplémentaire 112.

Les figures 8A, 16 et 17 montrent en outre que le rebord 180 est pourvu de plusieurs (ici trois) grilles d'aération 182. En outre, à l'extrémité du logement supplémentaire 112 qui est opposée à l'ouverture 113, le logement supplémentaire 112 peut présenter un orifice d'aération (non représenté sur les dessins). Grâce aux grilles d'aération 182 et à l'orifice d'aération, il peut se produire une convection d'air à travers le logement supplémentaire 112 qui tend à réduire le risque de surchauffe accidentelle des éléments de batterie 60.

Les figures 8B à 8D montrent en outre qu'à son extrémité longitudinale au rebord 180, le plateau 170 peut être pourvu d'un plot saillant 159, de forme cylindrique ou plus préférablement tronconique. Le plot saillant 159 est ici porté par un rebord longitudinal 159L, lequel peut être rapporté au plateau 170 ou bien formé d'un seul tenant avec le plateau 170. Comme cela est représenté sur la [Fig.12], à son extrémité opposée à l'ouverture 113, le logement supplémentaire 112 présente une pièce de centrage 118 munie d'un orifice de centrage (non référencé). Le plot saillant 159 et l'orifice de centrage sont dimensionnés de sorte que le plot saillant 159 est reçu dans l'orifice de centrage lorsque l'ensemble de batteries supplémentaire 140 est à son emplacement prévu dans le logement 112. Le plot saillant 159 et l'orifice de centrage tendent à faciliter la mise en place de l'ensemble de batteries supplémentaire 140 dans le logement 112.

De façon avantageuse, comme cela est visible sur la [Fig.4], la surface inférieure 114 est inclinée vers le sol dans une direction qui s'éloigne de l'ouverture 113. Cette inclinaison vers la surface du sol facilite l'insertion de l'ensemble de batteries supplémentaire 140 dans le logement supplémentaire 112, et tend à empêcher que l'ensemble de batteries supplémentaire 140 ne sorte accidentellement du logement supplémentaire 112 lorsque l'engin de travail 1 est en mouvement, y compris sur un sol incliné.

En référence à la [Fig.17], le plateau 170 peut porter sur ses deux plus longs côtés une pluralité d'éléments saillants 215. Ces éléments saillants 215 sont analogues aux éléments saillants 115 et aptes à coopérer avec des éléments d'élingage. Ainsi, après avoir partiellement extrait l'ensemble de batteries supplémentaire 140 du logement supplémentaire 112 comme montré sur la [Fig.17], l'opérateur peut installer des éléments d'élingage, qui sont ici des œillets d'élingage 120, sur les éléments saillants 215, et ensuite installer des élingues sur les éléments d'élingage, ce qui permet de soulever et déplacer l'ensemble de batteries supplémentaire 140.

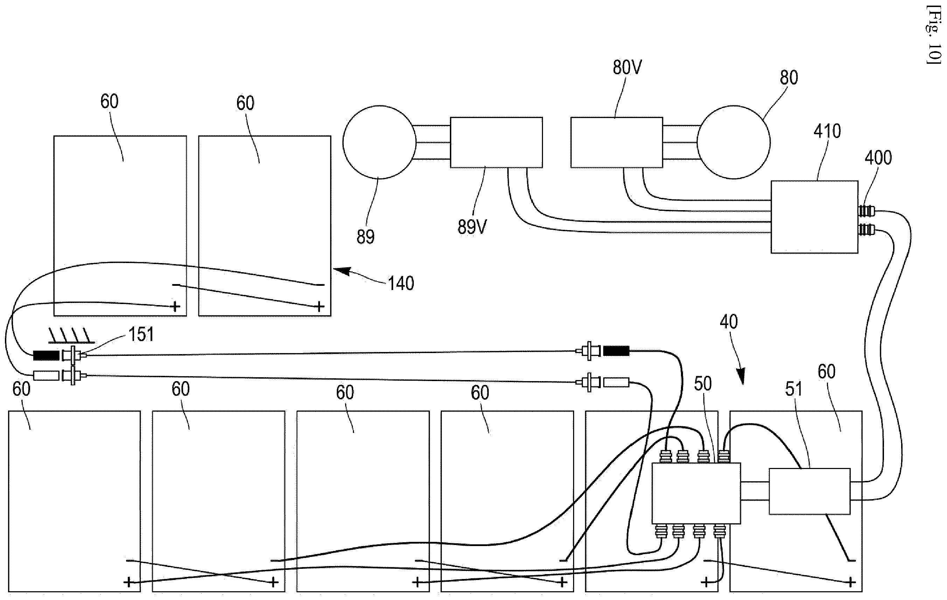

La [Fig.10] est un diagramme fonctionnel représentant l'alimentation électrique de l'engin de travail 1 à l'aide de l'ensemble de batteries 40 et de l'ensemble de batteries supplémentaire 140.

Dans chacun des ensemble de batteries 40 et ensemble de batteries supplémentaire 140, les éléments de batterie 60 sont branchés en série par paires pour fournir à chaque fois une tension de 96 V. Les paires d'éléments de batterie 60 sont branchées en parallèle les unes avec les autres, soit trois paires dans l'ensemble de batteries 40 et une paire dans l'ensemble de batteries supplémentaire 140.

Comme cela est représenté sur la [Fig.10], l'ensemble de batteries supplémentaire 140 est connecté électriquement au boîtier de connexion électrique 50 via la prise de sortie de puissance supplémentaire 151. L'ensemble de batteries 40 et l'ensemble de batteries supplémentaire 140 sont connectés électriquement, via la prise de sortie de puissance 51 de l'ensemble de batteries 140, à une prise d'entrée de puissance 400 de l'engin de travail 1. Ainsi, l'ensemble de batteries supplémentaire 140 contribue à l'autonomie de l'engin de travail 1.

Toujours en référence à la [Fig.10], l'engin de travail 1 comporte un boîtier de distribution de puissance 410 qui porte la prise d'entrée de puissance 400 et qui est configuré pour alimenter ou non les composants électriques de l'engin de travail 1. De tels boîtiers de distribution de puissance sont connus en tant que tels et ne sont pas décrits en détail ici.

Le boîtier de distribution de puissance 410 est notamment connecté électriquement à un variateur électrique de vitesse 80V lui-même connecté électriquement au moteur électrique 80, et à un variateur électrique de vitesse 89V lui-même connecté électriquement à un moteur électrique 89 pour l'actionnement du bras de levage 20. Les variateurs électriques de vitesse 80V et 89V sont ici du type onduleur triphasé, c'est-à-dire recevant en entrée une tension continue et fournissant en sortie une tension alternative triphasée. D'autres configurations électriques sont toutefois possibles.

De façon non représentée sur la [Fig.10], le boîtier de distribution de puissance 410 peut en outre être connecté électriquement à d'autres équipements électriques de l'engin de travail 1, notamment un module de chauffage de la cabine 29, et/ou un module de climatisation de la cabine 29, et/ou un ou plusieurs convertisseurs continu-continu (DC/DC) pour l'alimentation électrique d'autres équipements électriques de l'engin, par exemple un feu de signalisation, un avertisseur sonore, etc.

Le boîtier de distribution de puissance 410 peut par exemple être reçu dans le caisson 28. Le boîtier de connexion électrique 50 est disposé entre les longerons 10 du fait de son positionnement sur l'ensemble de batteries 40.

De façon non représentée sur les dessins, le boîtier de connexion électrique 50 peut en outre être connecté électriquement à au moins une prise de chargement permettant de recharger les éléments de batterie 60 de l'ensemble de batteries 40 et le cas échéant de l'ensemble de batteries 140.

Le nombre d'éléments de batterie 60 sur la [Fig.10] est purement indicatif. Un nombre plus ou moins grand d'éléments de batterie 60 peut être prévu, selon les besoins en puissance électrique de l'engin de travail 1. En outre, il est possible de prévoir non pas un mais plusieurs boîtiers de connexion électrique 50, chacun connectés électriquement à une ou plusieurs paires d'éléments de batterie 60 branchés en série par paires pour fournir à chaque fois une tension de 96 V. Dans ce cas, les boîtiers de connexion électrique 50 sont connectés électriquement en parallèle au boîtier de distribution de puissance 410.

Dans un autre mode de réalisation non représenté, le boîtier de connexion électrique 50 et le boîtier de distribution de puissance 410 sont colocalisés, et par exemple intégrés sous la forme d'un unique boîtier de connexion et de distribution.

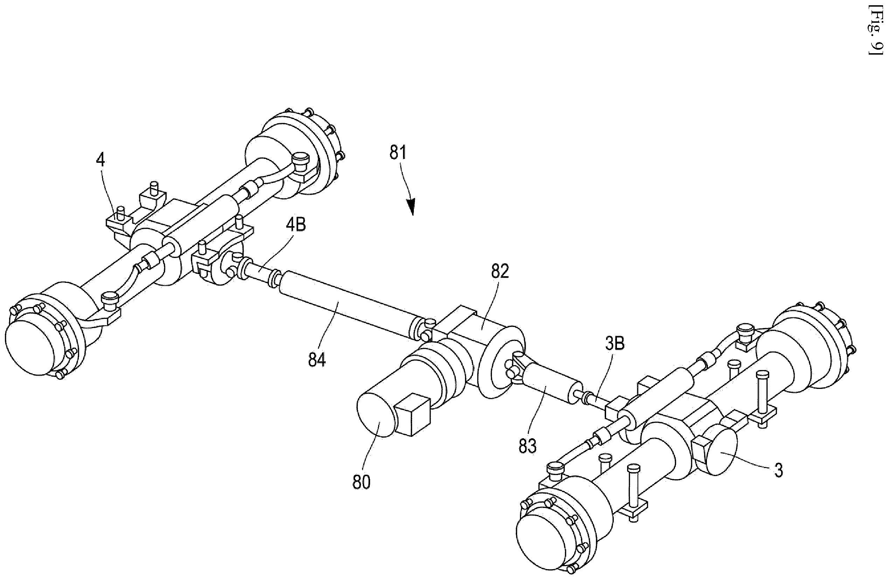

Comme on l'a déjà mentionné ci-dessus, le moteur électrique 80 assure la propulsion du châssis 2. Purement à titre d'exemple, on a représenté sur la [Fig.9] une transmission 81 assurant une transmission de puissance entre le moteur électrique 80 et les essieux 3 et 4 du châssis. Un arbre de sortie (non représenté) du moteur électrique 80 entraîne, via un réducteur 82, deux arbres 83 et 84. L'arbre 84 entraîne un arbre d'entrée 4B permettant d'entraîner les roues arrière 4A montées sur l'essieu arrière 4, et l'arbre 83 entraîne un arbre d'entrée 3B permettant d'entraîner les roues avant 3A montées sur l'essieu avant 3. Il est à noter que les arbres 83 et 84 s'étendent ici sensiblement parallèlement à l'axe avant-arrière A-A de l'engin de travail 1 et donc aux longerons 10. Il est en outre à noter que l'arbre de sortie (non représenté) du moteur électrique 80 s'étend jusque sous le logement 12 ménagé entre les longerons 10. En variante, un grand nombre d'autres configurations sont possibles pour la transmission 81.

Le moteur électrique 89 assure quant à lui l'actionnement du bras de levage 20. Selon un exemple, le moteur électrique 89 entraîne une pompe hydraulique, laquelle alimente des actionneurs hydrauliques, par exemple des vérins hydrauliques, pour actionner les mouvements du bras de levage 20. Les mouvements comportent par exemple les mouvements de montée-descente effectués par un vérin de levage situé sous le bras de levage 20, les mouvements d'extension-rétraction effectués par un vérin de télescopage situé dans le bras de levage 20, et les mouvements du porte-outil. Un tel actionnement hydraulique du bras de levage 20 est bien connu en tant que tel et n'est donc pas décrit en détail ici.

Le moteur électrique 80 peut être reçu dans le caisson 28, comme représenté schématiquement sur la vue en section de dessous de la [Fig.2]. Certains ou tous des autres composants décrits ci-dessus, à savoir les variateurs électriques de vitesse 80V et 89V, le moteur électrique 89 et le boîtier de distribution de puissance 410, peuvent également être reçus dans le caisson 28. En variante, le moteur électrique 80 et/ou le moteur électrique 89 peuvent être situés entre les deux longerons 10, ou encore sous les deux longerons 10.

Dans la description qui précède, on a décrit un engin de travail 1 avec une motorisation entièrement électrique, c'est-à-dire sans moteur à combustion interne. Toutefois, en variante, l'engin de travail 1 peut avoir une motorisation hybride, c'est-à-dire que le moteur électrique 80 et/ou le moteur électrique 89 pourraient être chacun combinés avec un moteur à combustion interne et une transmission adaptée pour une motorisation hybride, selon les principes connus pour les véhicules à motorisation hybride. Une telle solution peut notamment permettre d'accroître le couple disponible pour la propulsion du châssis 2 et/ou l'actionnement du bras de levage 20, ce qui peut être utile pour un engin de travail 1 devant être utilisé en conditions d'utilisation difficiles.

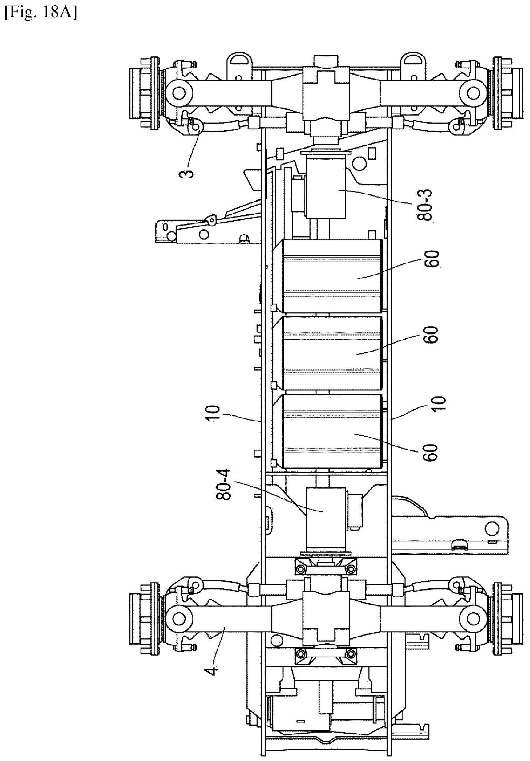

Comme on l'a mentionné ci-dessus, un grand nombre d'autres configurations que celle représentée sur la [Fig.9] sont possibles pour la transmission 81. En outre, ces configurations peuvent être envisagées en combinaison avec des agencements où les éléments de batterie 60 sont disposés entre les deux longerons 10, mais sans être fournis sous la forme d'un ensemble de batteries 40 ou 140. On décrit ci-après en rapport avec les figures 18A à 21, à titre d'illustration, des exemples de configurations entrant dans ce cadre.

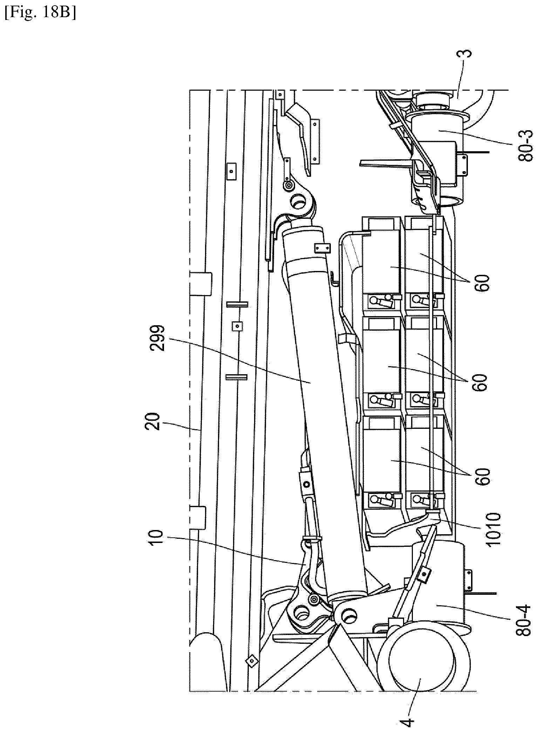

Les figures 18A et 18B représentent partiellement une variante de l'engin de travail 1. La [Fig.18A] est une vue partielle en section depuis le dessous de l'engin de travail 1, tandis que la [Fig.18B] est une vue en perspective où l'un des longerons 10 a été retiré afin de rendre visibles les éléments de batterie 60.

Comme cela est visible sur ces figures, les éléments de batterie 60 sont ici au nombre de six, connectés électriquement en série par paires comme on l'a déjà décrit ci-dessus. Les éléments de batterie 60 sont disposés entre les deux longerons 10, et sont plus spécifiquement logés dans un cadre 1010 solidaire des longerons 10. Le fond du cadre 1010 n'est pas montré sur les figures 18A et 18B afin de rendre visible les éléments de batterie 60.

Les éléments de batterie 60 alimentent en électricité deux moteurs électriques de propulsion 80-3 et 80-4. Le moteur électrique 80-3 entraîne un arbre d'entrée de l'essieu avant 3, éventuellement via un réducteur (non représenté). De même, le moteur électrique 80-4 entraîne un arbre d'entrée de l'essieu arrière 4, éventuellement via un réducteur (non représenté). Les arbres de sortie des moteurs électriques 80-3 et 80-4 sont ici alignés sensiblement parallèlement à l'axe avant-arrière A-A de l'engin de travail 1 et donc aux longerons 10.

On a en outre représenté sur la [Fig.18B] un vérin hydraulique 299 de levage du bras 20. Ce vérin hydraulique 299 peut être entraîné par une pompe hydraulique elle-même entraînée par un moteur électrique (non représenté), lequel est lui aussi alimenté en électricité par les éléments de batterie 60.

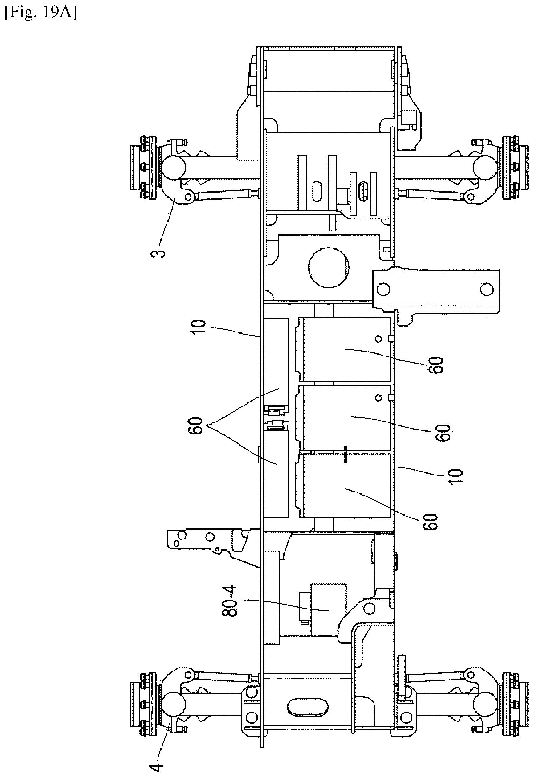

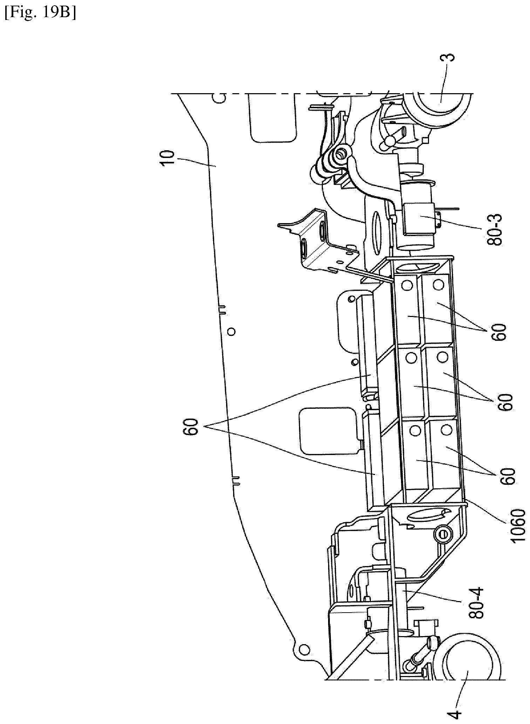

Les figures 19A et 19B représentent partiellement une autre variante de l'engin de travail 1. La [Fig.19A] est une vue partielle en section depuis le dessous de l'engin de travail 1, tandis que la [Fig.19B] est une vue en perspective où l'un des longerons 10 a été retiré afin de rendre visibles les éléments de batterie 60.

Comme cela est visible sur ces figures, les éléments de batterie 60 sont ici au nombre de huit, connectés électriquement en série par paires comme on l'a déjà décrit ci-dessus. Les éléments de batterie 60 sont disposés entre les deux longerons 10, et sont plus spécifiquement logés dans un cadre 1060 solidaire des longerons 10. Six des huit éléments de batterie 60 sont empilés les uns au-dessus des autres, par paires. Les deux derniers éléments de batterie 60 (à savoir les plus près du seul longeron 10 visible sur la [Fig.19B]) sont quant à eux disposés face à face dans le cadre 1060.

Dans cette variante également, les éléments de batterie 60 alimentent en électricité deux moteurs électriques de propulsion 80-3 et 80-4. Le moteur électrique 80-3 entraîne un arbre d'entrée de l'essieu avant 3, éventuellement via un réducteur (non représenté). De même, le moteur électrique 80-4 entraîne un arbre d'entrée de l'essieu arrière 4, éventuellement via un réducteur (non représenté). Les arbres de sortie des moteurs électriques 80-3 et 80-4 sont ici alignés sensiblement parallèlement à l'axe avant-arrière A-A de l'engin de travail 1 et donc aux longerons 10. Toutefois, à la différence de la variante des figures 18A et 18B, le moteur électrique de propulsion 80-4 est situé plus près de la surface du sol que le moteur électrique de propulsion 80-3.

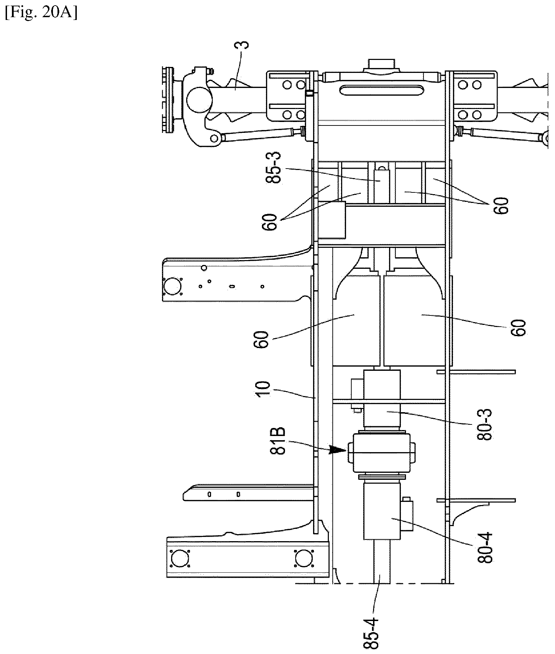

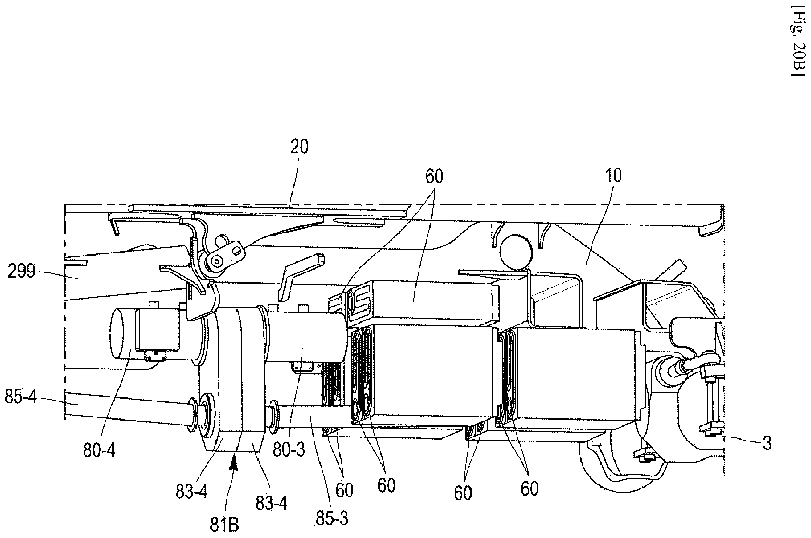

Les figures 20A et 20B représentent partiellement encore une autre variante de l'engin de travail 1. La [Fig.20A] est une vue partielle en section depuis le dessous de l'engin de travail 1, tandis que la [Fig.20B] est une vue en perspective où l'un des longerons 10 a été retiré afin de rendre visibles les éléments de batterie 60.

Comme cela est visible sur ces figures, les éléments de batterie 60 sont ici au nombre de dix, connectés électriquement en série par paires comme on l'a déjà décrit ci-dessus. Quatre paires d'éléments de batterie 60 sont disposées de part et d'autre de l'arbre 85-3 qui sera décrit plus loin ; plus précisément, deux paires d'éléments de batterie 60 sont disposées de chaque côté de l'arbre 85-3. La cinquième paire d'éléments de batterie 60 est disposée au-dessus de ces quatre paires d'éléments de batterie 60 et de l'arbre 85-3. Les éléments de batterie 60 sont ici aussi également reçus entre les deux longerons 10, dans un cadre ou un logement qui ne sont pas représentés.

Dans cette variante également, les éléments de batterie 60 alimentent en électricité deux moteurs électriques de propulsion 80-3 et 80-4. Toutefois, la chaîne de transmission mécanique entre ces moteurs électriques et les essieux 3 et 4 est différente.

Plus précisément, comme cela est mieux visible sur la [Fig.20B], un ensemble réducteur 81B est disposé entre les moteurs électriques de propulsion 80-3 et 80-4. L'ensemble réducteur 81B comprend deux réducteurs 83-3 et 83-4, chaque réducteur 83-3, 83-4 étant recouvert par un demi-carter, les deux demi-carters étant accolés et solidarisés de façon à former un carter complet du réducteur 81B. En variante, chaque réducteur 83-3, 83-4 pourrait être reçu dans un carter complet, les deux carters étant accolés et solidarisés l'un à l'autre.

Le moteur électrique de propulsion 80-3 entraîne, via le réducteur 83-3, un arbre 85-3 pour l'entraînement de l'essieu avant 3. De même, le moteur électrique de propulsion 80-4 entraîne, via le réducteur 83-4, un arbre 85-4 pour l'entraînement de l'essieu arrière 4. Comme on l'a mentionné ci-dessus, l'arbre 85-3 passe entre quatre paires d'éléments de batterie 60.

L'arbre 85-3 et l'arbre 85-4 s'étendent sensiblement parallèlement à l'axe avant-arrière A-A de l'engin de travail 1 et donc aux longerons 10. L'arbre 85-3 et l'arbre 85-4 ne sont toutefois pas nécessairement dans le prolongement l'un de l'autre. Par exemple, dans l'exemple représenté sur la [Fig.20B], l'arbre 85-3 et 85-4 sont situés dans le même plan, mais leurs directions longitudinales forment un angle différent de 180 degrés. Ainsi, l'arbre 85-3 et/ou l'arbre 85-4 peuvent être inclinés par rapport à la surface du sol.

On a en outre représenté sur la [Fig.20B] un vérin hydraulique 299 de levage du bras 20. Ce vérin hydraulique 299 peut être entraîné par une pompe hydraulique elle-même entraînée par un moteur électrique (non représenté), lequel est lui aussi alimenté en électricité par les éléments de batterie 60.

Dans les exemples décrits précédemment, l'essieu avant 3 et l'essieu arrière 4 sont entraînés par un ou plusieurs moteurs de propulsion électriques via une chaîne de transmission mécanique. Toutefois, d'autres configurations sont possibles, et notamment une chaîne de transmission hydraulique. Ainsi dans tous les exemples précédents, un ou chaque moteur électrique peut être remplacé par un moteur hydraulique remplissant la même fonction que le moteur électrique.

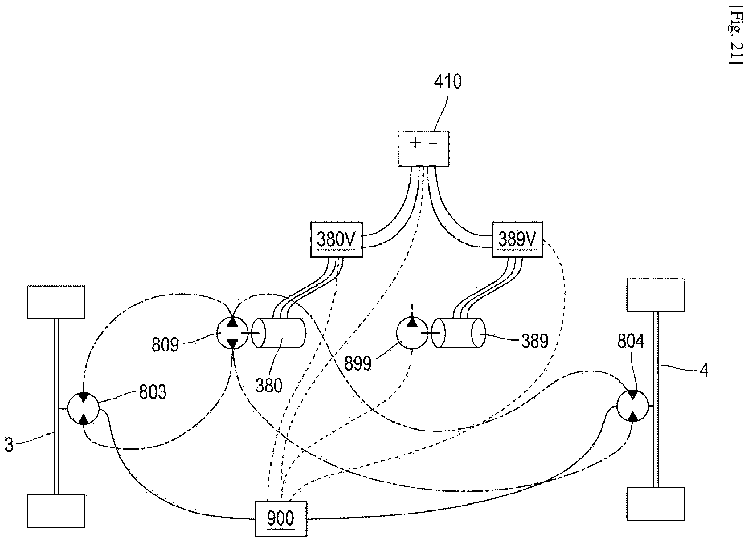

La [Fig.21] est un diagramme fonctionnel représentant un exemple d'une telle chaîne de transmission hydraulique. Sur ce diagramme, les lignes courbes en trait plein représentent des connexions électriques, les lignes courbes en pointillés représentent une commande par une unité de commande, et les lignes courbes en trait mixte représentent une alimentation en fluide hydraulique.

Comme représenté sur cette figure, un moteur hydraulique 803 est couplé à l'essieu avant 3, et un moteur hydraulique 804 est couplé à l'essieu arrière 4. Une pompe hydraulique 809 génère un flux hydraulique entraînant les moteurs hydrauliques 803 et 804. La pompe hydraulique 809 est entraînée par un moteur électrique 380, ce moteur électrique 380 étant alimenté en électricité par les éléments de batterie 60. Dans l'exemple représenté sur la [Fig.21], le moteur électrique 380 est alimenté en électricité par les éléments de batterie 60 via un variateur électrique de vitesse 380V. Le variateur électrique de vitesse 380V est lui-même connecté électriquement au boîtier de distribution de puissance 410 décrit plus haut. Le variateur électrique de vitesse 380V peut être du type onduleur triphasé. D'autres configurations électriques sont toutefois possibles.

Pour l'actionnement du bras de levage 20, un autre moteur électrique 389 entraîne une pompe hydraulique 899. La pompe hydraulique 899 alimente des actionneurs hydrauliques, de façon connue en soi comme on l'a déjà décrit ci-dessus. Le moteur électrique 389 est alimenté en électricité par les éléments de batterie 60 via un variateur électrique de vitesse 389V. Le variateur électrique de vitesse 389V est lui-même connecté électriquement au boîtier de distribution de puissance 410 décrit plus haut. Le variateur électrique de vitesse 389V peut être du type onduleur triphasé. D'autres configurations électriques sont toutefois possibles.

Une unité de commande 900, qui peut elle aussi être alimentée en électricité par les éléments de batterie 60, commande l'actionnement des moteurs hydrauliques 803 et 804, de la pompe hydraulique 899, et des variateurs électriques de vitesse 380V et 389V.

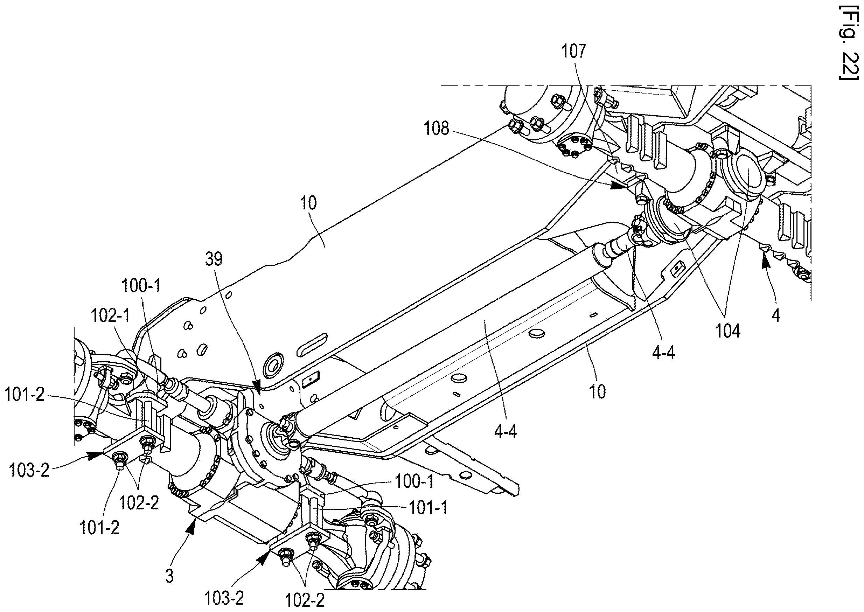

La [Fig.22] représente partiellement encore une autre variante de l'engin de travail 1. Dans cette variante, le moteur électrique 80 entraîne l'essieu avant 3 via un réducteur 39 intégré à l'essieu avant 3. Dans ce cas, un arbre d'entrée 4-4 de l'essieu arrière 4 est entraîné via un arbre de transmission 34 lui-même entraîné par le moteur électrique 80 via le réducteur 39.

On voit également sur la [Fig.22] que l'essieu avant 3 est fixé à l'un des longerons 10 via une platine 100-1 solidaire de ce longeron 10, et à l'autre des longerons 10 via une platine 100-2 solidaire de cet autre longeron 10.

Plus concrètement, l'essieu avant 3 est fixé à la platine 100-1 au moyen de deux goujons 101-1. Les goujons 101-1 sont filetés à leurs deux extrémités. Des écrous 102-1 sont vissés sur les deux extrémités des goujons 101-1 de façon à serrer la platine 100-1 ainsi qu'une contre-platine 103-1 (cf. [Fig.3]) contre l'essieu avant 3 et par là maintenir l'essieu avant 3 fermement en place par rapport au longeron 10. L'essieu avant 3 est fixé de façon identique à la platine 100-2 au moyen de deux goujons 101-2 filetés à leurs deux extrémités, de quatre écrous 102-2 et d'une contre-platine 103-2.

Toujours en référence à la [Fig.22], l'essieu arrière 4 est fixé aux longerons 10 via deux platines de support arrière 107, chacune solidaire des deux longerons 10. Un palier radial 108 est fixé, ici par boulonnage, à chacune des platines de support arrière 107. L'essieu arrière 4 comporte deux tourillons 104. Chacun des tourillons 104 est reçu dans un palier radial 108. Ainsi l'essieu arrière 4 est maintenu en position par rapport au châssis 2 suivant la direction longitudinale A-A tout en étant capable de pivoter par rapport au châssis 2. La façon qui vient d'être décrite de fixer l'essieu avant 3 et les essieux arrière 4 aux longerons 10 peut être employée dans toutes les variantes décrites précédemment de l'engin de travail 1.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Engin de travail (1) comprenant :
- un châssis mobile (2) déplaçable sur la surface du sol, le châssis (2) comportant deux longerons (10) parallèles entre eux et s'étendant parallèlement à une direction longitudinale (A-A) de l'engin (1) ; et
- un bras de levage (20) s'étendant parallèlement à la direction longitudinale (A-A) de l'engin (1), le bras de levage (20) étant articulé aux deux longerons (10) entre les deux longerons de façon à être mobile à pivotement par rapport aux deux longerons (10) autour d'un axe de pivotement (P) s'étendant perpendiculairement à la direction longitudinale (A-A) de l'engin,
- au moins deux éléments de batterie (60) ; et
- au moins un moteur électrique (80, 380, 89, 389) pour la propulsion du châssis (2) et pour l'actionnement du bras de levage (20), les éléments de batterie étant connectés électriquement audit au moins un moteur électrique pour fournir de la puissance audit au moins un moteur électrique ;
l'engin de travail (1) étant **caractérisé en ce que** les éléments de batterie sont disposés entre les deux longerons (10), sous le bras de levage (20).

2. Engin de travail (1) selon la revendication 1, dans lequel les éléments de batterie (60) sont disposés de part et d'autre d'un axe longitudinal médian (A-A) de l'engin de travail et/ou à cheval sur l'axe longitudinal médian de l'engin de travail, de préférence avec une distribution de masse sensiblement équilibrée par rapport à l'axe longitudinal médian.

3. Engin de travail (1) selon la revendication 1 ou 2, comprenant en outre un essieu avant (3) monté à une portion d'extrémité avant du châssis (2) et un essieu arrière (4) monté à une portion d'extrémité arrière du châssis (2), et au moins une transmission (81, 82, 83, 84, 809) accouplant ledit au moins un moteur électrique (80, 380) à au moins l'un de l'essieu avant (3) et l'essieu arrière (4).

4. Engin de travail (1) selon la revendication 3, dans lequel les éléments de batterie (60) sont disposés entre l'essieu avant (3) et l'essieu arrière (4) le long de la direction longitudinale.

5. Engin de travail (1) selon la revendication 3 ou 4, dans lequel ledit au moins un moteur électrique comporte un moteur électrique de propulsion (80, 380) pour la propulsion du châssis (2), les éléments de batterie étant connectés électriquement au moteur électrique de propulsion (80, 380) via un variateur électrique de vitesse (80V, 380V), ladite transmission comportant une chaîne de transmission mécanique ou hydraulique couplant ledit moteur électrique de propulsion à au moins l'un de l'essieu avant (3) et l'essieu arrière (4).

6. Engin de travail (1) selon la revendication 3 ou 4, dans lequel ledit au moins un moteur électrique comporte un premier moteur électrique de propulsion (80-3) couplé à l'essieu avant (3) par une première chaîne de transmission mécanique et un deuxième moteur électrique de propulsion (80-4) couplé à l'essieu arrière (4) par une deuxième chaîne de transmission mécanique.

7. Engin de travail (1) selon l'une quelconque des revendications 3 à 5, dans lequel ladite transmission comporte une chaîne de transmission hydraulique couplant ledit au moins un moteur électrique (380) à au moins l'un de l'essieu avant (3) et l'essieu arrière (4), la chaîne de transmission hydraulique comprenant au moins une pompe hydraulique (809) entraînée par ledit au moins un moteur électrique (380) et au moins un moteur hydraulique (803, 804) entraîné par un flux hydraulique généré par ladite pompe hydraulique, ledit au moins un moteur hydraulique (803, 804) étant couplé à au moins l'un de l'essieu avant (3) et l'essieu arrière (4).

8. Engin de travail (1) selon l'une quelconque des revendications 1 à 7, dans lequel ledit au moins un moteur électrique comporte un moteur électrique d'actionnement (89, 389) pour l'actionnement du bras de levage (20), les éléments de batterie étant connectés au moteur électrique d'actionnement (89) via un variateur électrique de vitesse (89V, 389V).

9. Engin de travail (1) selon la revendication 8, dans lequel le moteur électrique d'actionnement (89) comporte au moins un vérin électrique configuré pour actionner au moins un mouvement du bras de levage (20).

10. Engin de travail (1) selon la revendication 8 ou 9, comprenant en outre une pompe hydraulique (899) couplée au moteur électrique d'actionnement (89, 389) et au moins un actionneur hydraulique (299) alimenté par la pompe hydraulique pour actionner au moins un mouvement du bras de levage (20).

11. Engin de travail (1) selon l'une quelconque des revendications 1 à 10, comprenant en outre une cabine (29) pour un conducteur de l'engin de travail, la cabine étant située en saillie sur un côté latéral du châssis de l'engin de travail.

12. Engin de travail (1) selon l'une quelconque des revendications 1 à 11, dans lequel le châssis (2) comporte un logement (12) recevant les éléments de batterie, le logement (12) présentant une ouverture (13) débouchant vers une direction choisie parmi l'avant de l'engin de travail, l'arrière de l'engin de travail, le dessus du châssis, le dessous du châssis et une direction latérale opposée à une cabine de l'engin de travail.

13. Engin de travail (1) selon la revendication 12, dans lequel le logement (12) présente une surface inférieure (14) sur laquelle les éléments de batterie reposent directement ou indirectement, la surface inférieure (14) étant inclinée vers la surface du sol dans une direction qui s'éloigne de l'ouverture (13).

14. Engin de travail (1) selon la revendication 12 ou 13, dans lequel l'ouverture (13) du logement (12) est obturée par une grille d'aération.

15. Engin de travail (1) selon l'une quelconque des revendications 12 à 14, dans lequel le logement (12) présente un orifice d'aération distant de l'ouverture.

16. Engin de travail (1) selon l'une quelconque des revendications 1 à 15, comprenant en outre des éléments de batterie supplémentaires pour fournir de la puissance électrique audit au moins un moteur électrique (80, 89) de l'engin de travail, les éléments de batterie supplémentaires étant disposés entre les deux longerons (10), et dans lequel le châssis (2) comporte un logement supplémentaire (112) recevant les éléments de batterie supplémentaires, le logement supplémentaire (112) présentant une ouverture (113) débouchant vers l'arrière de l'engin de travail et une surface inférieure (114) sur laquelle les éléments de batterie supplémentaires reposent directement ou indirectement.

17. Engin de travail (1) selon l'une quelconque des revendications 1 à 16, dans lequel lesdits au moins deux éléments de batterie (60) font partie d'un ensemble de batteries (40) globalement parallélépipédique, l'ensemble de batteries (40) comprenant une plaque de support, lesdits au moins deux éléments de batterie (60) étant fixés à une face supérieure de la plaque de support par rapport à une direction de hauteur de l'ensemble de batteries (40), et l'ensemble de batteries (40) présentant une plus grande largeur ℓ dans une direction de largeur de l'ensemble de batteries, une plus grande longueur L dans une direction de longueur de l'ensemble de batteries, et une plus grande hauteur h dans la direction de hauteur de l'ensemble de batteries, la plus grande longueur L étant supérieure à la plus grande largeur ℓ, la plus grande longueur L et la plus grande hauteur h vérifiant l'inégalité h/L ≤ 0,40.

18. Engin de travail (1) selon la revendication 17, dans lequel l'ensemble de batteries (40) comprend en outre :
- un boîtier de connexion électrique (50) connecté électriquement aux éléments de batterie (60) ; et
- une prise de sortie de puissance (51) connectée électriquement à une sortie du boîtier de connexion électrique (50) et connectable électriquement à une prise d'entrée de puissance (400) de l'engin de travail (1).

19. Engin de travail (1) selon la revendication 17 ou 18, dans lequel la plus grande largeur ℓ et la plus grande hauteur h vérifient l'inégalité h/ℓ ≤ 0,60.

20. Engin de travail (1) selon l'une quelconque des revendications 17 à 19, dans lequel la plus grande longueur L et la plus grande largeur ℓ vérifient l'inégalité ℓ/L ≤ 0,30.

21. Engin de travail (1) selon l'une quelconque des revendications 17 à 20, dans lequel la plaque de support (41) comporte une pluralité de patins en polymère sur une face inférieure (41B) opposée à la face supérieure (41A) à laquelle les éléments de batterie (60) sont fixés.

22. Engin de travail (1) selon l'une quelconque des revendications 17 à 21, dans lequel la plaque de support (41) présente, à l'une de ses extrémités dans la direction de longueur, deux orifices traversants (49), les orifices traversants (49) étant dimensionnés pour permettre à un opérateur humain de soulever l'ensemble de batteries par ladite extrémité en saisissant la plaque de support (41) par les deux orifices traversants (49).

23. Engin de travail (1) selon l'une quelconque des revendications 17 à 22, dans lequel la plaque de support (41) porte une pluralité d'éléments saillants (115) dans la direction de largeur et/ou dans la direction de longueur, les éléments saillants (115) étant aptes à coopérer avec des éléments d'élingage (120).

24. Engin de travail (1) selon l'une quelconque des revendications 17 à 23, dans lequel les éléments de batterie (60) sont des éléments de batterie lithium-ion.

25. Engin de travail (1) selon l'une quelconque des revendications 17 à 24, dans lequel le châssis comporte un logement (12, 112) recevant l'ensemble de batteries, le logement (12, 112) présentant une ouverture débouchant vers l'avant ou l'arrière de l'engin de travail et une surface inférieure sur laquelle l'ensemble de batteries repose directement ou indirectement.

26. Engin de travail (1) selon la revendication 25, dans lequel la surface inférieure du logement (12, 112) est inclinée vers la surface du sol dans une direction qui s'éloigne de l'ouverture du logement.

27. Engin de travail (1) selon la revendication 25 ou 26, dans lequel le logement (12) présente une surface supérieure (15) en regard de la surface inférieure (14), la surface supérieure présentant un pan incliné (16) de telle sorte qu'une section transversale du logement (12) s'élargit en allant vers l'ouverture (13).

28. Engin de travail (1) selon l'une quelconque des revendications 17 à 27, dans lequel l'ensemble de batteries (40) comporte en outre au moins un galet (79) monté libre en rotation sur une surface supérieure de l'ensemble de batteries (40), le galet (79) étant agencé pour coopérer avec le pan incliné (16) lorsque l'ensemble de batteries (40) est extrait du logement (12) par l'ouverture (13) du logement (12).

29. Engin de travail (1) selon l'une quelconque des revendications 17 à 28, dans lequel la plaque de support (41) présente une pluralité de lumières (47), les lumières étant alignées les unes avec les autres dans la direction de longueur de l'ensemble de batteries (40), et dans lequel le châssis comporte un arbre (200) situé au voisinage de l'ouverture du logement, l'arbre portant une roue dentée (201) agencée de façon à pouvoir coopérer avec les lumières (47) de la plaque de support (41) et ainsi déplacer la plaque de support (41) en translation lorsque l'arbre (200) est entraîné en rotation.

30. Engin de travail (1) selon l'une quelconque des revendications 17 à 29, dans lequel l'ensemble de batteries (40) comporte en outre un plot saillant (59) à une extrémité longitudinale de l'ensemble de batteries, le plot saillant (59) étant reçu dans un orifice de centrage situé à une extrémité du logement (12) qui est opposée à l'ouverture (13) du logement (12).

## Patentansprüche

1. Arbeitsmaschine (1), umfassend:
- ein auf der Bodenfläche verschiebbares Chassis (2), wobei das Chassis zwei zueinander parallele und sich parallel zu einer Längsrichtung (A-A) der Maschine (1) erstreckende Längsträger (10) aufweist; und
- einen sich parallel zur Längsrichtung (A-A) der Maschine (1) erstreckenden Hubarm (20), wobei der Hubarm (20) an den beiden und zwischen den beiden Längsträgern (10) derart angelenkt ist, dass er in Bezug auf die beiden Längsträger (10) um eine sich senkrecht zur Längsrichtung (A-A) der Maschine erstreckende Schwenkachse schwenkbeweglich ist;
- mindestens zwei Batterieelemente (60); und
- mindestens einen Elektromotor (80, 380, 89, 389) für den Antrieb des Chassis (2) und für die Betätigung des Hubarms (20), wobei die Batterieelemente elektrisch mit dem mindestens einen Elektromotor verbunden sind, um Leistung an den mindestens einen Elektromotor zu liefern; wobei die Arbeitsmaschine (1) **dadurch gekennzeichnet ist, dass** die beiden Batterieelemente zwischen den beiden Längsträgern (10) unter dem Hubarm (20) angeordnet sind.

2. Arbeitsmaschine (1) nach Anspruch 1, wobei die Batterieelemente (60) beiderseitig einer Längsmittelachse (A-A) der Arbeitsmaschine und/oder rittlings auf der Längsmittelachse der Arbeitsmaschine angeordnet sind, bevorzugt mit einer im Wesentlichen ausgeglichenen Massenverteilung in Bezug auf die Längsmittelachse.

3. Arbeitsmaschine (1) nach Anspruch 1 oder 2, ferner umfassend eine Vorderachse (3), die an einem vorderen Endabschnitt des Chassis (2) montiert ist, und eine Hinterachse (4), die an einem hinteren Endabschnitt des Chassis (2) montiert ist, und mindestens ein Getriebe (81, 82, 83, 84, 809), das den mindestens einen Elektromotor (80, 380) mit mindestens einer von Vorderachse (3) und Hinterachse (4) verbindet.

4. Arbeitsmaschine (1) nach Anspruch 3, wobei die Batterieelemente (60) entlang der Längsrichtung zwischen der Vorderachse (3) und der Hinterachse (4) angeordnet sind.

5. Arbeitsmaschine (1) nach Anspruch 3 oder 4, wobei der mindestens eine Elektromotor einen elektrischen Antriebsmotor (80, 380) für den Antrieb des Chassis (2) umfasst, wobei die Batterieelemente über einen elektrischen Geschwindigkeitsregler (80V, 380V) mit dem elektrischen Antriebsmotor (80, 380) elektrisch verbunden sind, wobei das Getriebe einen mechanischen oder hydraulischen Antriebsstrang umfasst, der den elektrischen Antriebsmotor mit mindestens einer von Vorderachse (3) und Hinterachse (4) verbindet.

6. Arbeitsmaschine (1) nach Anspruch 3 oder 4, wobei der mindestens eine Elektromotor einen ersten elektrischen Antriebsmotor (80-3), der durch einen ersten mechanischen Antriebsstrang mit der Vorderachse (3) verbunden ist, und einen zweiten elektrischen Antriebsmotor (80-4), der durch einen zweiten mechanischen Antriebsstrang mit der Hinterachse (4) verbunden ist, umfasst.

7. Arbeitsmaschine (1) nach einem der Ansprüche 3 bis 5, wobei das Getriebe einen hydraulischen Antriebsstrang umfasst, der den mindestens einen Elektromotor (380) mit mindestens einer von Vorderachse (3) und Hinterachse (4) verbindet, wobei der hydraulische Antriebsstrang mindestens eine Hydraulikpumpe (809) umfasst, die durch den mindestens einen Elektromotor (380) angetrieben wird, und mindestens einen Hydraulikmotor (803, 804), der durch einen von der Hydraulikpumpe erzeugten Hydraulikfluss angetrieben wird, wobei der mindestens eine Hydraulikmotor (803, 804) mit mindestens einer von Vorderachse (3) und Hinterachse (4) verbunden ist.

8. Arbeitsmaschine (1) nach einem der Ansprüche 1 bis 7, wobei der mindestens eine Elektromotor einen elektrischen Betätigungsmotor (89, 389) zur Betätigung des Hubarms (20) umfasst, wobei die Batterieelemente über einen elektrischen Geschwindigkeitsregler (89V, 389V) mit dem elektrischen Betätigungsmotor (89) verbunden sind.

9. Arbeitsmaschine (1) nach Anspruch 8, wobei der elektrische Betätigungsmotor (89) mindestens einen Elektrozylinder umfasst, der ausgebildet ist zum Aktivieren einer Bewegung des Hubarms (20).

10. Arbeitsmaschine (1) nach Anspruch 8 oder 9, ferner umfassend eine Hydraulikpumpe (899), die mit dem elektrischen Betätigungsmotor (89, 389) verbunden ist, und einen hydraulischen Aktuator (299), der von der Hydraulikpumpe gespeist wird, um mindestens eine Bewegung des Hubarms (20) zu aktivieren.

11. Arbeitsmaschine (1) nach einem der Ansprüche 1 bis 10, ferner umfassend eine Kabine (29) für einen Maschinenführer, wobei die Kabine an einer Seitenwand des Chassis der Arbeitsmaschine vorspringend angeordnet ist.

12. Arbeitsmaschine (1) nach einem der Ansprüche 1 bis 11, wobei das Chassis (2) ein Gehäuse (12) zur Aufnahme der Batterieelemente aufweist, wobei das Gehäuse (12) eine Öffnung (13) hat, die in eine gewählte Richtung mündet, nämlich zur Vorderseite des Arbeitsgeräts, zur Rückseite des Arbeitsgeräts, zur Oberseite des Chassis, zur Unterseite des Chassis oder in eine seitliche Richtung entgegengesetzt zu einer Kabine der Arbeitsmaschine.

13. Arbeitsmaschine (1) nach Anspruch 12, wobei das Gehäuse (12) eine Unterseite (14) hat, auf der die Batterieelemente direkt oder indirekt aufliegen, wobei die Unterseite (14) in einer von der Öffnung (13) wegführenden Richtung zur Bodenfläche geneigt ist.

14. Arbeitsmaschine (1) nach Anspruch 12 oder 13, wobei die Öffnung (13) des Gehäuses (12) mit einem Lüftungsgitter verschlossen ist.

15. Arbeitsmaschine (1) nach einem der Ansprüche 12 bis 14, wobei das Gehäuse (12) eine von der Öffnung entfernte Belüftungsöffnung aufweist.

16. Arbeitsmaschine (1) nach einem der Ansprüche 1 bis 15, ferner umfassend zusätzliche Batterieelemente zum Liefern elektrischer Leistung an den wenigstens einen Elektromotor (80, 89) der Arbeitsmaschine, wobei die zusätzlichen Batterieelemente zwischen den beiden Längsträgern (10) angeordnet sind und wobei das Chassis (2) ein die zusätzlichen Batterieelemente aufnehmendes zusätzliches Gehäuse (112) aufweist, wobei das zusätzliche Gehäuse (112) eine Öffnung hat, die in Richtung zur Rückseite der Arbeitsmaschine mündet, und eine Unterseite (114), auf der die Batterieelemente direkt oder indirekt aufliegen.

17. Arbeitsmaschine (1) nach einem der Ansprüche 1 bis 16, wobei die wenigstens zwei Batterieelemente (60) Teil eines insgesamt quaderförmigen Batteriesatzes (40) sind, wobei der Batteriesatz (40) eine Stützplatte aufweist, wobei die wenigstens zwei Batterieelemente (60) in Bezug auf eine Höhenrichtung des Batteriesatzes (40) auf einer Oberseite der Stützplatte befestigt sind und wobei der Batteriesatz (40) eine größere Breite ℓ in einer Breitenrichtung des Batteriesatzes, eine größere Länge L in einer Längsrichtung des Batteriesatzes und eine größere Höhe h in der Höhenrichtung des Batteriesatzes aufweist, wobei die größere Länge L größer als die größere Breite ℓ ist und wobei die größere Länge L und die größere Höhe h die Ungleichung h/L ≤ 0,40 erfüllen.

18. Arbeitsmaschine (1) nach Anspruch 17, wobei der Batteriesatz (40) ferner umfasst:
- eine elektrische Anschlussbox (50), die mit den Batterieelementen (60) elektrisch verbunden ist; und
- eine Leistungsausgangsbuchse (51), die mit einem Ausgang der elektrischen Anschlussbox (50) elektrisch verbunden und mit einer Leistungseingangsbuchse (400) des Arbeitsfahrzeugs (1) elektrisch verbindbar ist.

19. Arbeitsmaschine (1) nach Anspruch 17 oder 18, wobei die größere Breite ℓ und die größere Höhe h die Ungleichung h/f ≤ 0,60 erfüllen.

20. Arbeitsmaschine (1) nach einem der Ansprüche 17 bis 19, wobei die größere Länge L und die größere Breite ℓ die Ungleichung ℓ/L ≤ 0,30 erfüllen.

21. Arbeitsmaschine (1) nach einem der Ansprüche 17 bis 20, wobei die Stützplatte (41) auf einer Unterseite (41B), die der Oberseite (41A) gegenüberliegt, an der die Batteriezellen (60) befestigt sind, eine Vielzahl von Polymerschuhen aufweist.

22. Arbeitsmaschine (1) nach einem der Ansprüche 17 bis 21, wobei die Stützplatte (41) in Längsrichtung an einem ihrer Enden zwei Durchgangsöffnungen (49) aufweist, wobei die Durchgangsöffnungen (49) derart dimensioniert sind, dass sie einer Bedienungsperson erlauben, den Batteriesatz an diesem Ende anzuheben, indem sie die Stützplatte über die beiden Durchgangsöffnungen greift.

23. Arbeitsmaschine (1) nach einem der Ansprüche 17 bis 22, wobei die Stützplatte (41) eine Mehrzahl von in der Breitenrichtung und/oder in der Längenrichtung vorspringenden Elementen (115) aufweist, die dazu eingerichtet sind, mit Anschlagelementen (120) zusammenzuwirken.

24. Arbeitsmaschine (1) nach einem der Ansprüche 17 bis 23, wobei die Batterieelemente (60) Lithium-Ionen-Batterieelemente sind.

25. Arbeitsmaschine (1) nach einem der Ansprüche 17 bis 24, wobei das Chassis ein den Batteriesatz aufnehmendes Gehäuse (12, 112) aufweist, wobei das Gehäuse (12, 112) eine Öffnung hat, die in die Vorderseite oder in die Rückseite der Arbeitsmaschine mündet, und eine Unterseite, auf welcher der Batteriesatz direkt oder indirekt aufliegt.

26. Arbeitsmaschine (1) nach Anspruch 25, wobei die Unterseite des Gehäuses (12, 112) in einer von der Öffnung des Gehäuses wegführenden Richtung zur Bodenfläche geneigt ist.

27. Arbeitsmaschine (1) nach Anspruch 25 oder 26, wobei das Gehäuse (12) eine der Unterseite (14) gegenüberliegende Oberseite (15) hat, wobei die Oberseite eine geneigte Fläche (16) derart aufweist, dass sich ein Querschnitt des Gehäuses (12) in Richtung auf die Öffnung (13) vergrößert.

28. Arbeitsmaschine (1) nach einem der Ansprüche 17 bis 27, wobei der Batteriesatz (40) ferner mindestens eine Rolle (79) aufweist, die frei drehbar auf einer Oberseite des Batteriesatzes (40) montiert ist, wobei die Rolle (79) dazu eingerichtet ist, mit der geneigten Fläche (16) zusammenzuwirken, wenn der Batteriesatz (40) durch die Öffnung (13) des Gehäuses (12) aus dem Gehäuse (12) herausgezogen wird.

29. Arbeitsmaschine (1) nach einem der Ansprüche 17 bis 28, wobei die Stützplatte (41) eine Mehrzahl von Schlitzen (47) aufweist und die Schlitze in Richtung der Länge des Batteriesatzes (40) zueinander ausgerichtet sind und wobei das Chassis in der Nähe der Öffnung des Gehäuses eine Welle (200) aufweist und die Welle ein Zahnrad (201) trägt, das derart ausgebildet ist, dass es mit den Schlitzen (47) der Stützplatte (41) zusammenwirken und solchermaßen die Stützplatte (41) translatorisch bewegen kann, wenn die Welle (200) gedreht wird.

30. Arbeitsmaschine (1) nach einem der Ansprüche 17 bis 29, wobei der Batteriesatz (40) ferner an einem Längsende desselben einen vorspringenden Klotz (59) aufweist, der in einer Zentrieröffnung aufgenommen wird, die sich an einem der Öffnung (13) des Gehäuses (12) gegenüberliegenden Ende des Gehäuses (12) befindet.

## Claims

1. An on-site vehicle (1) comprising:
- a mobile chassis (2) movable over the surface of the ground, the chassis (2) including two parallel side rails (10) extending parallel to a longitudinal direction (A-A) of the vehicle (1); and
- a lifting arm (20) extending parallel to the longitudinal direction (A-A) of the vehicle (1), the lifting arm (20) being articulated to the two side rails (10) between the two side rails so as to be mobile in pivoting relative to the two side rails (10) about a pivot axis (P) extending perpendicularly to the longitudinal direction (A-A) of the vehicle,
- at least two battery elements (60); and
- at least one electric motor (80, 380, 89, 389) for the propulsion of the chassis (2) and for the actuation of the lifting arm (20), the battery elements being electrically connected to said at least one electric motor to supply power to said at least one electric motor;
the on-site vehicle (1) being **characterized in that** the battery elements are disposed between the two side rails (10) below the lifting arm (20).

2. The on-site vehicle (1) as claimed in claim 1 in which the battery elements (60) are disposed on respective opposite sides of a longitudinal median axis (A-A) of the on-site vehicle and/or straddle the longitudinal median axis of the on-site vehicle, preferably with a substantially balanced weight distribution relative to the longitudinal median axis.

3. The on-site vehicle (1) as claimed in claim 1 or 2 further comprising a front axle (3) mounted on a front end portion of the chassis (2), a rear axle (4) mounted on a rear end portion of the chassis (2), and at least one transmission (81, 82, 83, 84, 809) coupling said at least one electric motor (80, 380) to the front axle (3) and/or the rear axle (4).

4. The on-site vehicle (1) as claimed in claim 3 in which the battery elements (60) are disposed between the front axle (3) and the rear axle (4) in the longitudinal direction.

5. The on-site vehicle (1) as claimed in claim 3 or 4 in which said at least one electric motor includes an electric propulsion motor (80, 380) for the propulsion of the chassis (2), the battery elements being electrically connected to the propulsion electric motor (80, 380) via an electrical variable speed drive (80 V, 380 V),said transmission including a mechanical or hydraulic transmission coupling said propulsion electric motor to the front axle (3) and/or the rear axle (4).

6. The on-site vehicle (1) as claimed in claim 3 or 4 in which said at least one electric motor includes a first propulsion electric motor (80-3) coupled to the front axle (3) by a first mechanical transmission and a second propulsion electric motor (80-4) coupled to the rear axle (4) by a second mechanical transmission.

7. The on-site vehicle (1) as claimed in any one of claims 3 to 5 in which said transmission includes a hydraulic transmission coupling said at least one electric motor (380) to the front axle (3) and/or the rear axle (4), the hydraulic transmission including at least one hydraulic pump (809) driven by said at least one electric motor (380) and at least one hydraulic motor (803, 804) driven by a hydraulic flow generated by said hydraulic pump, said at least one hydraulic motor (803, 804) being coupled to the front axle (3) and/or the rear axle (4).

8. The on-site vehicle (1) as claimed in any one of claims 1 to 7 in which said at least one electric motor includes an actuator electric motor (89, 389) for actuation of the lifting arm (20), the battery elements being connected to the actuator electric motor (89) via an electric variable speed drive (89V, 389V).

9. The on-site vehicle (1) as claimed in claim 8 in which the actuator electric motor (89) includes at least one electric cylinder configured to actuate at least one movement of the lifting arm (20).

10. The on-site vehicle (1) as claimed in claim 8 or 9 further including a hydraulic pump (899) coupled to the actuator electric motor (89, 389) and to at least one hydraulic actuator (299) fed by the hydraulic pump to actuate at least one movement of the lifting arm (20).

11. The on-site vehicle (1) as claimed in any one of claims 1 to 10 further including a cab (29) for a driver of the on-site vehicle, the cab projecting on one lateral side of the chassis of the on-site vehicle.

12. The on-site vehicle (1) as claimed in any one of claims 1 to 11 in which the chassis (2) includes a housing (12) receiving the battery elements, the housing (12) having in it an opening (13) that opens in a direction chosen from the front of the on-site vehicle, the rear of the on-site vehicle, the upper side of the chassis, the underside of the chassis and a lateral direction away from a cab of the on-site vehicle.

13. The on-site vehicle (1) as claimed in claim 12 in which the housing (12) has a lower surface (14) on which the battery elements rest directly or indirectly, the lower surface (14) being inclined toward the surface of the ground in a direction away from the opening (13).

14. The on-site vehicle (1) as claimed in claim 12 or 13 in which the opening (13) in the housing (12) is closed by a ventilation grill.

15. The on-site vehicle (1) as claimed in any one of claims 12 to 14 in which the housing (12) includes a ventilation orifice at a distance from the opening.

16. The on-site vehicle (1) as claimed in any one of claims 1 to 15 further including supplementary battery elements for supplying electrical power to said at least one electric motor (80, 89) of the on-site vehicle, the supplementary battery elements being disposed between the two side rails (10), and in which the chassis (2) includes a supplementary housing (112) receiving the supplementary battery elements, the supplementary housing (112) includes an opening (113) that opens toward the rear of the on-site vehicle and a lower surface (114) on which the supplementary battery elements rest directly or indirectly.

17. The on-site vehicle (1) as claimed in any one of claims 1 to 16 in which said at least two battery elements (60) are part of a globally parallelepipedal set of batteries (40), the set of batteries (40) including a support plate, said at least two battery elements (60) being fixed to an upper face of the support plate relative to a heightwise direction of the set of batteries (40), and the set of batteries (40) having a greatest width ℓ in a widthwise direction of the set of batteries, a greatest length L in a lengthwise direction of the set of batteries, and a greatest height h in the heightwise direction of the set of batteries, the greatest length L being greater than the greatest width ℓ, the greatest length L and the greatest height h satisfying the condition h/L ≤ 0.40.

18. The on-site vehicle (1) as claimed in claim 17 in which the set of batteries (40) further includes:
- an electrical connection unit (50) electrically connected to the battery elements (60); and
- a power outlet socket (51) electrically connected to an outlet of the electrical connection unit (50) and electrically connectable to a power input socket (400) of the on-site vehicle (1).

19. The on-site vehicle (1) as claimed in claim 17 or 18 in which the greatest width ℓ and the greatest height h satisfy the condition h/ℓ ≤ 0.60.

20. The on-site vehicle (1) as claimed in any one of claims 17 to 19 in which the greatest length L and the greatest width ℓ satisfy the condition ℓ/L ≤ 0.30.

21. The on-site vehicle (1) as claimed in any one of claims 17 to 20 in which the support plate (41) includes a plurality of polymer skids on a lower face (41B) opposite the upper face (41A) to which the battery elements (60) are fixed.

22. The on-site vehicle (1) as claimed in any one of claims 17 to 21 in which the support plate (41) has at one of its ends in the lengthwise direction two through-orifices (49), the through-orifices (49) being sized to enable a human operative to raise said end of the set of batteries by seizing the support plate (41) through the two through-orifices (49).

23. The on-site vehicle (1) as claimed in any one of claims 17 to 22 in which the support plate (41) carries a plurality of elements (115) projecting in the widthwise direction and/or in the lengthwise direction, the projecting elements (115) being adapted to cooperate with slinging elements (120).

24. The on-site vehicle (1) as claimed in any one of claims 17 to 23 in which the battery elements (60) are lithium-ion battery elements.

25. The on-site vehicle (1) as claimed in any one of claims 17 to 24 in which the chassis includes a housing (12, 112) receiving the set of batteries, the housing (12, 112) including an opening that opens toward the front or the rear of the on-site vehicle and a lower surface on which the set of batteries rests directly or indirectly.

26. The on-site vehicle (1) as claimed in claim 25 in which the lower surface of the housing (12, 112) is inclined toward the surface of the ground in a direction away from the opening of the housing.

27. The on-site vehicle (1) as claimed in claim 25 or 26 in which the housing (12) has an upper surface (15) facing the lower surface (14), the upper surface featuring an inclined flat (16) so that a cross section of the housing (12) widens in the direction toward the opening (13).

28. The on-site vehicle (1) as claimed in any one of claims 17 to 27 in which the set of batteries (40) further includes at least one roller (79) mounted on and free to rotate on an upper surface of the set of batteries (40), the roller (79) being adapted to cooperate with the inclined flat (16) when the set of batteries (40) is extracted from the housing (12) via the opening (13) of the housing (12).

29. The on-site vehicle (1) as claimed in any one of claims 17 à 28 in which the support plate (41) includes a plurality of openings (47), the openings being aligned with one another in the lengthwise direction of the set of batteries (40), and in which the chassis includes a shaft (200) situated in the vicinity of the opening of the housing, the shaft carrying a toothed wheel (201) adapted to be able to cooperate with the openings (47) in the support plate (41) and thus to move the support plate (41) in translation when the shaft (200) is driven in rotation.

30. The on-site vehicle (1) as claimed in any one of claims 17 to 29 in which the set of batteries (40) further includes a projecting stud (59) at one longitudinal end of the set of batteries, the projecting stud (59) being received in a centering orifice situated at an end of the housing (12) that is opposite the opening (13) of the housing (12).
